(19) Europäisches Patentamt
European Patent Office
Office européen des brevets

(11) **EP 4 195 516 B1**

(12) **EUROPEAN PATENT SPECIFICATION**

(45) Date of publication and mention
of the grant of the patent:
**25.06.2025  Bulletin 2025/26**

(21) Application number: **21852227.4**

(22) Date of filing: **02.08.2021**

(51) International Patent Classification (IPC):
*H04L 27/26* (2006.01)     *H04L 27/36* (2006.01)
*H04L 27/38* (2006.01)     *H04L 25/02* (2006.01)

(52) Cooperative Patent Classification (CPC):
**H04L 27/261; H04L 27/26132; H04L 27/364;
H04L 27/3863; H04L 27/3872;** H04L 25/0224

(86) International application number:
**PCT/CN2021/110055**

(87) International publication number:
**WO 2022/028364 (10.02.2022 Gazette 2022/06)**

(54) **ELECTRONIC DEVICE, COMMUNICATION METHOD, AND STORAGE MEDIUM**

ELEKTRONISCHE VORRICHTUNG, KOMMUNIKATIONSVERFAHREN UND SPEICHERMEDIUM

DISPOSITIF ÉLECTRONIQUE, PROCÉDÉ DE COMMUNICATION ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.08.2020  CN 202010783403**

(43) Date of publication of application:
**14.06.2023  Bulletin 2023/24**

(73) Proprietor: **Sony Group Corporation
Tokyo 108-0075 (JP)**

(72) Inventors:
  • **WANG, Zhaocheng
    Beijing 100084 (CN)**
  • **CAO, Jianfei
    Beijing 100028 (CN)**
  • **SHA, Ziyuan
    Beijing 100084 (CN)**

(74) Representative: **D Young & Co LLP
3 Noble Street
London EC2V 7BQ (GB)**

(56) References cited:
EP-A1- 1 993 213          EP-A2- 2 712 138
CN-A- 101 262 468        CN-A- 101 292 487
CN-A- 102 124 706        CN-A- 105 323 747
US-A1- 2015 117 866     US-B1- 6 785 292

## Description

### Cross Reference to Related Applications

The present application claims priority to Chinese patent application No. 202010783403.3 entitled "ELECTRONIC DEVICE, COMMUNICATION METHOD, AND STORAGE MEDIUM" filed on August 6, 2020.

## FIELD OF THE INVENTION

The present disclosure relates generally to wireless signal transmission. More particularly, the present disclosure relates to an electronic device, a communication method, and a storage medium applicable for wireless signal transmission on, for example, a Terahertz frequency band.

## BACKGROUND

In recent years, in order to meet a demand for increasingly higher wireless data transmission rate due to explosive growth of data traffic, the industry has been exploring the use of a method for providing wireless communication on a new high frequency band, for example, the currently popular 5G NR (New Radio) uses a millimeter wave band of 30GHz to 300 GHz. Furthermore, it is envisaged that wireless signal transmission of Terabits per second (Tbps) will be required in the near future, which motivates an exploration of higher frequency bands and a study on corresponding communication solutions. Among them, the Terahertz frequency band has been paid attention by the industry due to its various advantages, and even becomes a research hotspot of the next generation wireless communication standard.

However, the Terahertz frequency band is located between microwave frequency band and optical frequency band, and a communication device for this frequency band is difficult to be manufactured and has a significant radio frequency hardware impairment (RF impairment) effect. The RF hardware impairment effect causes a distortion in a received signal, resulting in deterioration of the communication performance. Although the RF hardware impairment effect also exists widely in communications on lower frequency bands, the effect is relatively less significant than on the Terahertz frequency band. There are many studies on RF hardware impairment processing in low frequency bands, mainly including pre-compensation (or predistortion) algorithms at the transmitter and compensations at the receiver. The predistortion at the transmitter mainly handles, for example, power amplification nonlinearity and IQ (in-phase/quadrature) imbalance at the transmitter, while the compensation at the receiver can handle the IQ imbalance at the receiver and a carrier phase noise.

On the one hand, considering the high manufacturing difficulty and high cost of the communication device for the high frequency band, it may be difficult to deploy a circuit for compensating the RF hardware impairments at the transmitter or the receiver. On the other hand, even in the case where the predistortion compensation circuit is deployed at the transmitter, there may be strong residual distortions. This has resulted in existing solutions combating the RF hardware impairments unsatisfactorily, especially for high-frequency communications such as the Terahertz communication.

Therefore, there is a need for improvements for mitigating the communication performance deterioration caused by the RF hardware impairments or the like.

Prior art is described in EP2712138A and US 2015/117866A.

## SUMMARY OF THE INVENTION

With one or more aspects of the present disclosure, the above-identified need is met.

A brief summary regarding the present disclosure is given here to provide a basic understanding on some aspects of the present disclosure. However, it will be appreciated that the summary is not an exhaustive description of the present disclosure. It is not intended to identify key portions or important portions of the present disclosure, nor to limit the scope of the present disclosure. It aims at merely describing some concepts about the present disclosure in a simplified form and serves as a preorder of a more detailed description to be given later.

According to the invention, there is provided an electronic device according to claim 1.

According to the invention, there is provided an electronic device for a receiver according to claim 7.

## DESCRIPTION OF THE DRAWINGS

A better understanding of the present disclosure may be achieved by referring to a detailed description given hereinafter in connection with accompanying drawings, wherein the same or similar reference signs are used to indicate the same or similar elements throughout the drawings. The drawings are to be included in the specification and form a part of the specification along with the following detailed descriptions, for further illustrating embodiments of the present disclosure and for explaining the theory and advantages of the present disclosure. Wherein,

FIG. 1 shows the Terahertz frequency band on the electromagnetic spectrum;

FIG. 2 shows a schematic diagram of the I/Q imbalance experienced by modulated I-branch and Q-branch baseband signals;

FIG. 3 shows a signal constellation map obtained by linear equalization under an influence of the RF hardware impairment effect;

FIG. 4 shows a flow chart of channel estimation according to a first embodiment;

FIG. 5 schematically shows constellation maps associated with different modulation schemes;

FIG. 6 shows an example of signaling for indicating a pilot sequence according to the first embodiment;

FIG. 7 shows a comparative example of original decision regions and decision regions under the least distance criterion in QPSK modulation scheme;

FIG. 8 shows simulation results of a non-coded Bit Error Rate (BER) performance of the signal transmission method according to the first embodiment with QPSK and 16QAM modulations;

FIGS. 9A and 9B illustrate an electronic device for a transmitter and a communication method thereof according to the first embodiment, respectively;

FIGS. 10A and 10B illustrate an electronic device for a receiver and a communication method thereof according to the first embodiment, respectively;

FIG. 11 shows an example of insertions of a pilot sequence for joint estimation and a pilot sequence for phase tracking;

FIG. 12 shows a flow chart for adjusting transmission parameters based on DNR according to a second embodiment;

FIGS. 13A to 13D show simulation results of a signal transmission method according to the second embodiment;

FIGS. 14A and 14B illustrate an electronic device for a transmitter and a communication method thereof according to the second embodiment, respectively;

FIGS. 15A and 15B illustrate an electronic device for a receiver and a communication method thereof according to the second embodiment, respectively;

FIG. 16 illustrates a first example of schematic configuration of the base station according to the present disclosure;

FIG. 17 illustrates a second example of schematic configuration of the base station according to the present disclosure;

FIG. 18 illustrates an example of schematic configuration of a smart phone according to the present disclosure; and

FIG. 19 illustrates an example of schematic configuration of an automobile navigation device according to the present disclosure.

Further features and aspects of the present disclosure will become apparent from the following description with reference to the attached drawings.

DETAILED DESCRIPTION OF PREFERRED EMBODIMENTS

Various illustrative embodiments of the present disclosure will be described hereinafter with reference to the drawings. For purpose of clarity and simplicity, not all implementations of the embodiments are described in the specification. Note that, however, many settings specific to the implementations can be made in practicing the embodiments of the present disclosure according to specific requirements, so as to achieve specific goals of the developers. Furthermore, it will be appreciated that the developing work will be a routine task, despite complex and tedious, for those skilled in the art who benefit from the present disclosure.

In addition, to avoid obscure the present disclosure with unnecessary details, the figures illustrate only steps of a process and/or components of a device that are closely related to the technical solutions according to the present disclosure. The following descriptions of the illustrative embodiments are merely explanatory and should not be regarded as any limit to the scope of the present disclosure and the applications thereof.

For convenient explanation, technical solutions of the present disclosure will be described below by taking the Terahertz communication as an exemplary scenario. It should be noted, however, that the RF hardware impairment to which the present disclosure is directed may exist in communications on various frequency bands (the radio wave bands such as centimeter waves, millimeter waves, the Terahertz frequency band, the optical wave bands, and so on), and thus the technical solutions of the present disclosure are not limited to the Terahertz communication in practice, but may be applied in various communication scenarios to obtain improved wireless signal transmission performance, even not limited to the purpose of mitigating the RF hardware impairment.

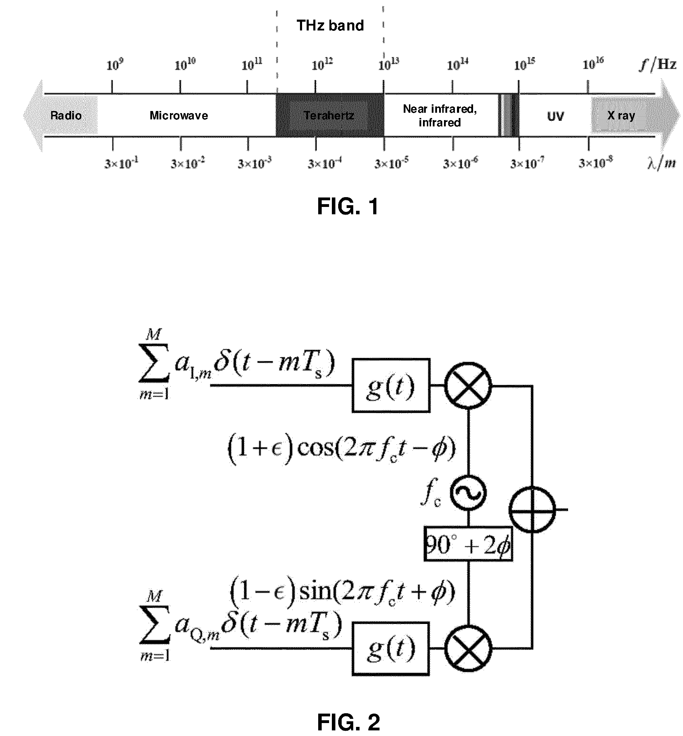

The Terahertz communication refers to spatial communication using Terahertz waves as information carriers. FIG. 1 shows the Terahertz frequency band on the electromagnetic spectrum. The Terahertz frequency band is from about 0.1THz to 10THz, between microwave and infrared frequencies in terms of frequency, and between electrons and photons in terms of energy. On the electromagnetic spectrum, technologies for the infrared and the microwave on both sides of the Terahertz frequency band are very mature, but the Terahertz technology is basically a blank because the technology is neither completely suitable to be processed by the optical theory, nor completely suitable to be studied with the microwave theory.

The Terahertz frequency band has an extremely broad bandwidth which has not been allocated for use, can support a data transmission rate of more than 10Gbps, and has better confidentiality and anti-interference capability. The use of the Terahertz frequency band can effectively relieve the increasingly tense spectral resources and a capacity limit on the current wireless communication system, and is the first choice for future wireless communications.

Nonetheless, it is a huge challenge to implement the Terahertz communication. A Terahertz link has a larger pathloss than millimeter waves, including free-space loss and molecular absorption loss, and therefore requires directional antennas with a very narrow beam to balance the link budget. In addition, the Terahertz frequency band is too high for an electronic device and too low for an optical device, so that the RF hardware impairment effect inevitably exists, no matter which of the electronic device or the optical device is adopted as the Terahertz communication device.

The present disclosure provides exemplary embodiments for mitigating the RF hardware impairment effect. Detailed descriptions will be described with reference to the accompanying drawings.

[First Embodiment]

According to a first embodiment of the present disclosure, a scenario is considered where there is no compensation/predistortion for the RF hardware impairment at a transmitter.

The "transmitter" and the "receiver" referred to in the present disclosure may be a base station and/or a User Equipment (UE) depending on a direction of the transmission. For example, for a downlink transmission, the transmitter is a base station and the receiver is a UE; for a uplink transmission, the transmitter is a UE and the receiver is a base station; for a Sidelink transmission, both of the transmitter and the receiver are UEs.

It should be noted that the term "base station" as used in the present disclosure refers to a device on network control side in a wireless communication system, having its full breadth of its usual meaning. For example, in addition to a gNB and ng-eNB specified in the 5G communication standard, depending on scenarios in which the technical solutions of the present disclosure are applied, the "base station" may also be, for example, an eNB in a 4G LTE/LTE-A communication system, a NodeB in a 3G communication system, a remote radio head, a wireless access point, a relay node, a drone control tower, or a communication device for performing similar control functions. Application examples of the base station will be described in detail in following sections.

In addition, the term "UE" used in the present disclosure refers to a device on user side in the wireless communication system, having full breadth of its usual meaning, and including various terminal devices or in-vehicle devices communicating with a base station or another UE. As an example, the UE may be a terminal device such as a mobile phone, a laptop, a tablet, a in-vehicle communication device, a drone or the like. Application examples of the UE will be described in detail in following sections.

For an exemplary Terahertz communication, the transmitter may employ a photonic or electronic architecture to generate a Terahertz signal. For example, the photonic transmitter architecture may generate a series of laser signals with different frequencies and use a frequency difference of two laser signals to obtain the Terahertz signal. The electronic transmitter architecture is similar to the conventional microwave architecture, i.e., generates a Terahertz local oscillator signal and up-converts a baseband I/Q signal to an RF signal. Comparatively speaking, the electronic transmitter architecture can be highly integrated on a chip and is more practical. The receiver on the receiving side performs an inverse process of the transmitter, and may adopt the electronic architecture, for example.

Regardless of the architecture, both of the transmitter and the receiver may suffer from severe RF hardware impairment effect. A signal model for the RF hardware impairment is described below.

The present disclosure considers three main hardware impairment factors in a communication device:

1) a phase noise caused by phase fluctuations in the local oscillator;
2) I/Q imbalance, such as an amplitude difference between the I-branch and Q-branch baseband signals, or a phase difference between the I-branch and Q-branch baseband signals that is not exactly 90°; and
3) power amplification nonlinearity, caused by nonlinear distortion in the power amplifier.

FIG. 2 shows a schematic diagram of the I/Q imbalance experienced by modulated I-branch and Q-branch baseband signals. For the I/Q imbalance in the transmitter, an I-branch carrier signal of the transmitter is denoted as $(1 + \varepsilon_T) \cos(2\pi f_c t - \phi_T)$, and a Q-branch carrier signal is denoted as $(1 - \varepsilon_T)\sin(2\pi f_c t + \phi_T)$, wherein $\varepsilon_T$, $\phi_T$ are imbalance factors of amplitudes and phases of the I branch and the Q branch, respectively.

Further considering the phase noise at the transmitter, an equivalent transmit baseband signal can be expressed as

$$\tilde{s}[n] = (\mu_T s[n] + v_T s^*[n])e^{j\theta_T[n]} \qquad (1)$$

where $\mu_T = \cos\phi_T - j\varepsilon_T\sin\phi_T$, $v_T = \varepsilon_T\cos\phi_T - j\sin\phi_T$, $\theta_T[n]$ is the phase noise in the transmitter, and $v_T s^*[n]$ is an image interference term caused by the I/Q imbalance.

The phase noise $\theta_T[n]$ is modeled here as a block walk model, i.e., assuming that within the $k$-th transport block, $\theta_T[n]$ is a fixed value $\theta_k$, and $\theta_k$ for adjacent transport blocks differ in a random walk term $\Delta\theta_k$ having a gaussian distribution, and can be expressed as

$$\theta_{k+1} = \theta_k + \Delta\theta_k, \qquad \Delta\theta_k \sim N(0, \quad \sigma_{\theta,T}^2)$$

where $\sigma_{\theta,T}^2$ is a variance of the walk term.

Next, the power amplification nonlinearity of the transmitter is considered. Here, using a model of memoryless polynomial containing three terms, the equivalent baseband signal at output of the power amplifier can be expressed as

$$s_{PA}[n] = \sum_{i=1,3,5} b_i \tilde{s}[n]|\tilde{s}[n]|^{i-1}$$

where by way of example, assuming $b_1$ = 1.0108 + j0. 0858, $b_3$ = 0.0879 - j0.1583, $b_5$ = -1.0992 - j0.8991.

Since the Terahertz communication usually employs antennas with an extremely high directional gain on the transmitting and receiving sides, a channel can be considered to have only one effective transmission path, and thus a flat fading channel model is adopted, so that a received signal can be represented as

$$y[n] = hs_{PA}[n] + w[n]$$

where $h$ is a channel fading factor, and $w[n] \sim CN(0, \sigma_n^2)$ is Additive White Gaussian Noise (AWGN), which includes thermal noise and molecular absorption noise.

Similarly, assuming that $\varepsilon_R$ and $\phi_R$ are the imbalance factors of the amplitude and phase of the I branch and the Q branch at the receiver, respectively, and the phase noise $\theta_R[n]$ at the receiver also follows the block walk model, and a final equivalent baseband received signal can be expressed as

$$\tilde{y}[n] = \mu_R y[n]e^{-j\theta_R[n]} + v_R y^*[n]e^{j\theta_R[n]} \qquad (2)$$

where $\mu_R = \cos\phi_R + j\varepsilon_R\sin\phi_R$, and $v_R = \varepsilon_R\cos\phi_R - j\sin\phi_R$.

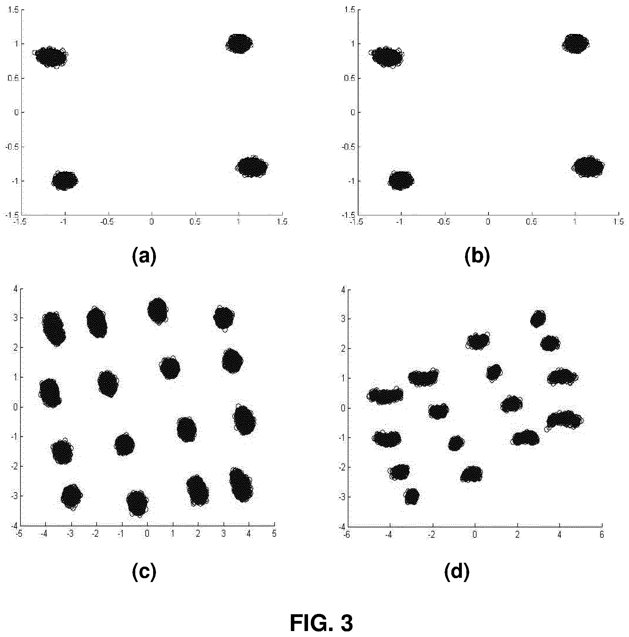

FIG. 3 illustrates signal constellations obtained by linear equalization under the signal model as described above, where (a), (b) of FIG. 3 correspond to the QPSK modulation scheme, and (c), (d) correspond to the 16QAM modulation scheme. As an example of slight I/Q imbalance, in (a), (c) of FIG. 3, $\varepsilon_T = \varepsilon_R = \varepsilon = 0.05$, and $\phi_T = \phi_R = \phi = 0.5°$. As an example of severe I/Q imbalance, in (b), (d) of FIG. 3, $\varepsilon_T = \varepsilon_R = \varepsilon = 0.2$, and $\phi_T = \phi_R = \phi = 2°$. In addition, the phase noise parameter is

$$\sigma_{\theta,T}^2, \sigma_{\theta,R}^2 \sim N(0, (5°)^2).$$

As shown in FIG. 3, if a conventional linear equalization strategy is applied to the signal model containing the RF hardware impairment effect, the signal constellations are found to be irregularly distorted. This will result in degradation of the error rate performance.

In this regard, the first embodiment of the present disclosure employs a channel estimation based on constellation points, instead of the linear equalization.

Assuming that there is no channel noise ($w[n]$ = 0), a received signal of each constellation point $s_i$ can be written as $y_i = h(s_i)s_i$. With the signal model as established above, inventors of the present disclosure have discovered that the channel $h(s_i)$ corresponding to each constellation point $s_i$ is generally different, which is why the conventional linear equalization strategy does not work effectively.

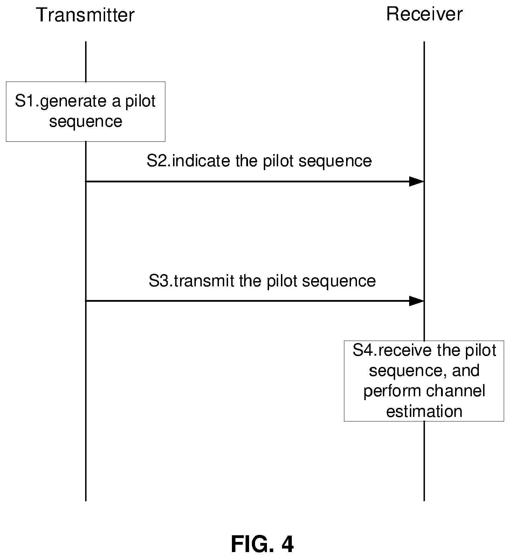

The channel estimation according to the first embodiment of the present disclosure is described below with reference to FIG. 4. As shown in FIG. 4, the transmitter designs and generates a pilot sequence for the channel estimation (S1). In particular, the pilot sequence according to the first embodiment is associated with the modulation scheme to be used, and contains information about all constellation points of corresponding constellation map.

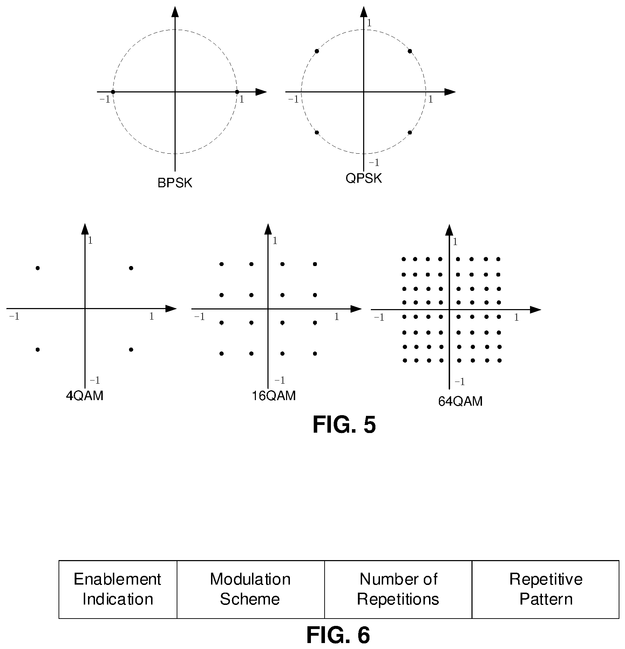

For a specific modulation scheme, a set of constellation points of the constellation map is denoted as $\chi = \{s_1, s_2, ..., s_M\}$, and includes $card(\chi) = M$ constellation points. FIG. 5 schematically shows constellation maps associated with modulation schemes such as Binary Phase Shift Keying (BPSK), Quadrature Phase Shift Keying (QPSK), 4QAM, 16QAM, 64QAM, respectively. Note that the modulation scheme to which the present disclosure is applicable is not limited thereto, and may include various modulation schemes such as MSK, 8PSK, and 256 QAM.

In one example, the transmitter may generate a pilot sequence to include all constellation points, i.e., $s = [s_1, s_2, ..., s_M]^T$. For example:

for BPSK, $s_{BPSK} = [1, -1]^T$;

for QPSK, $s_{QPSK} = \frac{1}{\sqrt{2}}[1 + j, 1 - j, -1 - j, -1 + j]^T$ ; and

for 16QAM, $s_{16QAM} = \frac{1}{\sqrt{10}}[3 + 3j, 3 + j, 1 + 3j, 1 + j, 3 - 3j, 3 - j, 1 - 3j, 1 - j, -3 - 3j, -3 - j, -1 - 3j, -1 - j, -3 + 3j, -3 + j, -1 + 3j, -1 + j]^T$.

In the first embodiment, the pilot sequence is described as including constellation points of a constellation map, but from the perspective of modulation, the pilot sequence can also be regarded as a sequence obtained from an all-1 sequence modulated with all constellation points.

Accordingly, in order to estimate $h(s_i)$ corresponding to each constellation point $s_i$, it is required to perform the channel estimation for $card(\chi)$ times. However, according to the above-mentioned signal model, it can be verified that the channels corresponding to two constellation points that are opposite numbers are the same, that is,

$$h(s_i) = h(-s_i)$$

With such characteristic, a basic pilot sequence can be designed such that for each pair of constellation points that are opposite numbers, the basic pilot sequence includes only one of the constellation points. In particular, it is assumed that in the constellation map, $s_i = -s_{i+M/2}$, on the one hand, in order to estimate $h(s_i)$, only one of $s_i$ and $s_{i+M/2}$ needs to be included in the pilot sequence, i.e., $s = [s_1, s_2, ..., s_{M/2}]^T$. On the other hand, in order to estimate $h(s_1), h(s_2), ..., h(s_{M/2})$, it is required to design the pilot sequence such that for any two constellation points in the constellation map, which are opposite numbers, one of the constellation points must be included in the pilot sequence.

For example, for BPSK, QPSK, 16QAM, their corresponding basic pilot sequences may be designed respectively as

$$s_{BPSK} = [1]^T,$$

$$s_{QPSK} = \frac{1}{\sqrt{2}}[1 + j, 1 - j]^T,$$

$$s_{16QAM} = \frac{1}{\sqrt{10}}[3 + 3j, 3 + j, 1 + 3j, 1 + j, 3 - 3j, 3 - j, 1 - 3j, 1 - j]^T.$$

The above basic pilot sequence actually includes a half of the constellation points corresponding to the right half of the constellation map as shown in FIG. 5. However, the basic pilot sequence is not limited thereto, and may include, for example, a half of the constellation points corresponding to the left half, the upper half, the lower half of the constellation map may be included, and the like.

In order to estimate $h(s_i)$ corresponding to each constellation point $s_i$, by generating such basic pilot sequence as a pilot sequence for channel estimation, it is required to estimate channels corresponding to only a half of the constellation points. The channel parameters to be estimated are $h(s_1), h(s_2), ..., h(s_{M/2})$. Thus, a length of the transmitted pilot sequence can be shortened, and workload of the channel estimation at the receiver can be reduced.

In some cases, however, it may be desirable for the pilot sequence generated by the transmitter to be long enough to improve an accuracy of estimating $h(s_i)$ with low signal-to-noise ratios. In this case, a final pilot sequence may be generated by repeating the basic pilot sequence.

As the simplest repetitive pattern, for example, $n$ basic pilot sequences may be directly concatenated repetitively, that is, the final pilot sequence is $[s^T, s^T, ..., s^T]^T$, wherein $n$ is the number of repetitions, and $s$ is the basic pilot sequence.

As another repetitive pattern, for example, the basic pilot sequences may be concatenated with alternate inversion, i.e., the final pilot sequence is $[s^T, -s^T, ..., s^T, -s^T]^T$ or $[s^T, s^T, ..., -s^T, -s^T]^T$. In this way, the pilot sequence actually includes all of constellation points $s_i$ and $s_{i+M/2}$.

For example, with the number of repetitions **n = 2,** the final pilot sequence obtained by the repetitive pattern with alternate inversion may be

$$s_{BPSK} = [1, -1]^T,$$

$$s_{QPSK} = \frac{1}{\sqrt{2}}[1 + j, 1 - j, -1 - j, -1 + j]^T,$$

$$s_{16QAM} = \frac{1}{\sqrt{10}}[3 + 3j, 3 + j, 1 + 3j, 1 + j, 3 - 3j, 3 - j, 1 - 3j, 1 -$$

$$j, -3 - 3j, -3 - j, -1 - 3j, -1 - j, -3 + 3j, -3 + j, -1 + 3j, -1 + j]^T,$$

where for $s_{BPSK}$, both of **1** and **-1** are used for estimation of **h(1)**, and for $s_{QPSK}$, both of $1 + j$ and $-1 - j$ are used for estimation of $h(1 + j)$, and so on.

In such generation manner, the pilot sequence used for channel estimation can be characterized by the basic pilot sequence, the number of repetitions, and the repetitive pattern. In particular, an example of directly taking the basic pilot sequence as the final pilot sequence can be considered as a special case where the number of repetitions is 1.

Referring back to FIG. 4, the transmitter may indicate the generated pilot sequence to the receiver before transmitting the pilot sequence (S2) so as to inform the configuration of the pilot sequence to be transmitted.

In one example, the pilot sequence may be indicated by means of the signaling as shown in FIG. 6. As shown in FIG. 6, the signaling may include: enablement indication that informs whether the pilot sequence specially designed according to the present embodiment is enabled, for example, with 1 bit; modulation scheme used for indicating a corresponding basic pilot frequency sequence; number of repetitions for indicating the number of repetitions of the basic pilot sequence in the final pilot sequence; repetitive pattern for indicating a repetitive pattern of the basic pilot sequence, such as direct repetition, repetition with alternate inversion, or the like.

It should be understood that the signaling format in FIG. 6 is merely exemplary, and may not be limited thereto in practice. Certain information may be conveyed by means of existing control signaling to be compatible with the existing control signaling, for example, a field regarding the modulation scheme (e.g., "modulation and coding scheme MSC") is included in existing Downlink Control Information (DCI), Uplink Control Information (UCI), and Sidelink Control Information (SCI), and the receiver may be configured to determine the modulation scheme to be used by receiving the field. In addition, when some information has been configured between the transmitter and the receiver in advance, the information may not be sent so as to reduce a burden of the signaling transmission. For example, the basic pilot sequence corresponding to each modulation scheme and its repetitive pattern may be pre-configured between the transmitter and the receiver. When the pilot sequence needs to be transmitted, the transmitter may notify the receiver of only the number of repetitions, so that the receiver may determine the pilot sequence to be received according to the received number of repetitions and the field about the modulation scheme, such as contained in DCI, UCI, and SCI.

There may be various indication mechanisms as long as the receiver is able to receive contents of the pilot sequence later.

Subsequently, the transmitter may transmit the pilot sequence to the receiver (S3). The transmitter can up-convert the pilot frequency sequence onto, for example, the Terahertz frequency band to obtain a pilot signal, and transmit it through directional antennas. The pilot signal is sometimes also referred to as a reference signal, but all of conventional reference signals have a constant modulus, i.e., its amplitude is a constant value, whereas the pilot signal generated according to the present embodiment may have an amplitude that is not constant.

The receiver receives the pilot signal and performs channel estimation based on the received pilot sequence (S4). Specifically, assuming that the received pilot sequence is obtained by repeating the basic pilot sequence, then in order to estimate $h(s_i)$, the receiver may average corresponding received symbols for each constellation point $s_i$.

For example, if a vector formed by the received symbols corresponding to the constellation point $s_i$ is $y_i$, and a vector formed by the received symbols corresponding to $s_{i+M/2}$ is $y_{i+M/2}$, then $h(s_i)$ can be estimated as follows:

$$\widehat{h}(s_i) = \widehat{h}(s_{i+M/2}) = \frac{mean\left(\left[y_i^T, -y_{i+\frac{M}{2}}^T\right]^T\right)}{s_i}$$

where **mean**$(\cdot)$ refers to the averaging operation.

The channel parameter **h(s_i)** obtained by the channel estimation process as described above may then be used for data demodulation. The transmitter modulates the data signals by using the modulation scheme associated with the pilot sequence and transmits the modulated data signals to the receiver.

For the received data symbols y, the receiver does not need to perform channel equalization, and only needs to decide **s_i** by adopting a least distance criterion according to a distance of **y** to $\hat{h}(s_i)s_i$, wherein the decision can be expressed as

$$\hat{s} = \underset{s_i}{\mathrm{argmin}} \, |y - \widehat{h}(s_i)s_i|$$

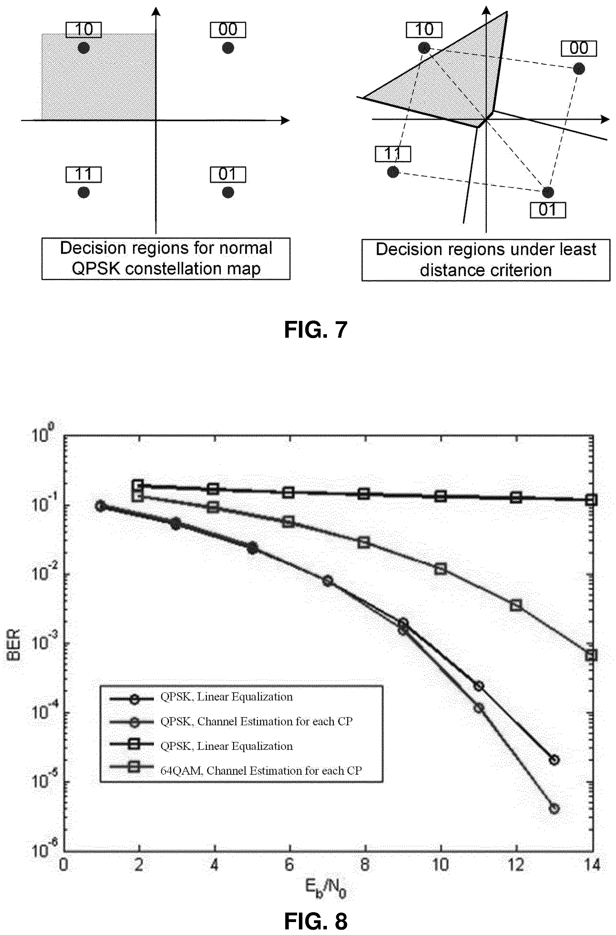

FIG. 7 shows a comparative example of original decision regions and decision regions using a minimum distance criterion in the QPSK modulation scheme. As shown in FIG. 7, although the constellation map is irregularly distorted due to the RF hardware impairment effect, data demodulation can be achieved reliably using the channel estimation according to the present embodiment.

FIG. 8 shows simulation results of the non-coded Bit Error Rate (BER) performance of the signal transmission method according to the first embodiment with QPSK and 16QAM modulations, compared with the performance of the conventional linear equalization. In the simulation, the I/Q imbalance parameters are $\varepsilon_T = \varepsilon_R = 0.2$, $\phi_T = \phi_R = 2°$, the phase noise parameter is $\sigma_{\theta,T}^2, \sigma_{\theta,R}^2 \sim N(0, (5°)^2)$, the size of a transport block is 1000 symbols, QPSK uses a pilot sequence with a length of 8 (i.e., the number of repetitions is 4), and 16QAM uses a pilot sequence with a length of 32 (i.e., the number of repetitions is 4).

As shown in FIG. 8, for QPSK, the performance gain obtained by using the signal transmission method according to the first embodiment is small because the constellation points have large intervals, and there is a strong ability to resist the RF hardware impairment effect. However, for 16QAM, the constellation points are dense, and bit errors occur easily due to the RF hardware distortion effect of Terahertz, so that an obvious performance gain can be obtained by using the signal transmission method according to the first embodiment.

Next, electronic devices and communication methods according to the first embodiment of the present disclosure are described.

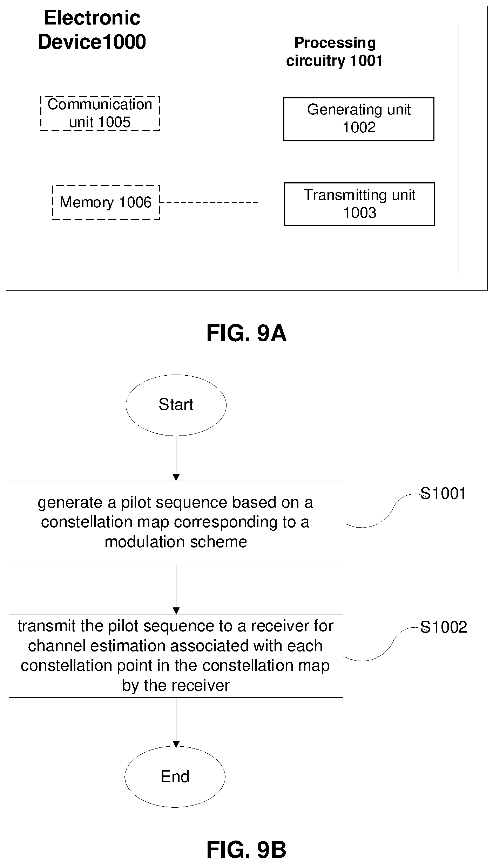

FIGS. 9A and 9B illustrate an electronic device for a transmitter and a communication method thereof, respectively, according to the first embodiment. FIG. 9A illustrates a block diagram of an electronic device 1000 for the transmitter. Depending on the specific communication scenario, the electronic device 1000 may be implemented as a base station or a UE. The electronic device 1000 may perform signal transmissions with an electronic device 2000 to be described below.

As shown in FIG. 9A, the electronic device 1000 includes a processing circuitry 1001, and the processing circuitry 1001 includes at least a generating unit 1002 and a transmitting unit 1003. The processing circuitry 1001 may be configured to perform the communication method as illustrated in FIG. 9B.

The generating unit 1002 of the processing circuitry 1001 is configured to generate a pilot sequence based on a constellation map corresponding to a modulation scheme (i.e., to perform step S1001 in FIG. 9B). For each pair of constellation points in the constellation map that are opposite numbers, the generated pilot sequence includes at least one constellation point of them. In one example, the pilot sequence may be generated by repeating a basic pilot sequence in a particular repetitive pattern, where the basic pilot sequence comprises one of each pair of constellation points which are opposite numbers.

The transmitting unit 1003 is configured to transmit the pilot sequence generated by the generating unit 1002 to the receiver for the receiver to perform channel estimation associated with each constellation point in the constellation map (i.e., to perform step S1002 in FIG. 9B). The transmitting unit 1003 can up-convert the pilot sequence onto, for example, a Terahertz frequency band, and transmit the pilot signal through directional antennas.

Optionally, the processing circuitry 1001 may further comprise an indicating unit (not shown) to indicate the generated pilot sequence to the receiver before transmitting the pilot sequence. In one example, in a case where the basic pilot sequence and its repetitive pattern have been configured to the receiver in advance, the indicating unit sends information on the number of repetitions of the basic pilot sequence to the receiver. In another example, the indicating unit sends information on the modulation scheme, the repetitive pattern and the number of repetitions of the basic pilot sequence to the receiver. However, the indicating unit is not necessary, and the receiver may determine the associated pilot sequence by only information about the modulation scheme contained in control information (such as UCI, DCI, SCI).

The electronic device 1000 may also include a communication unit 1005, for example. The communication unit 1005 may be configured to perform communication with a receiver (e.g., the electronic device 2000 described below), such as the Terahertz communication, under control of the processing circuitry 1001. In one example, the communication unit 1005 may be implemented as a transceiver, including an antenna array and/or a radio frequency link, among other communication components. The communication unit 1005 is depicted with a dashed line, since it may also be located outside the electronic device 1000.

The electronic device 1000 may also include a memory 1006. The memory 1006 may store various data and instructions, such as programs and data for operation of the electronic device 1000, various data generated by the processing circuitry 1001, and the like. The memory 1006 is depicted with a dashed line because it may also be located within the processing circuitry 1001 or outside the electronic device 1000.

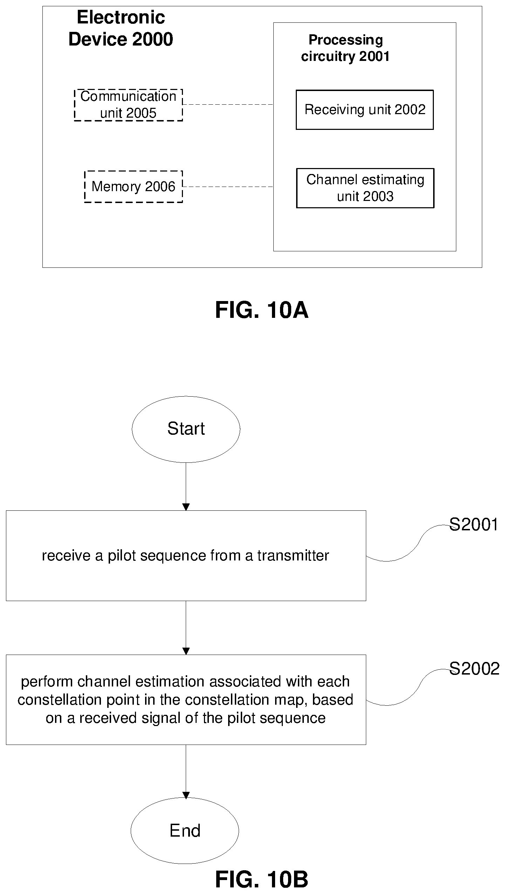

FIGS. 10A and 10B illustrate an electronic device for a receiver and a communication method thereof, respectively, according to the first embodiment. FIG. 10A illustrates a block diagram of an electronic device 2000 at the receiver. Depending on the specific communication scenario, the electronic device 2000 may be implemented as a base station or a UE. The electronic device 2000 may perform signal transmissions with the electronic device 1000 as described above.

As shown in FIG. 10A, the electronic device 2000 includes a processing circuitry 2001, and the processing circuitry 2001 includes at least a receiving unit 2002 and a channel estimating unit 2003. The processing circuitry 2001 may be configured to perform the communication method as shown in FIG. 10B.

The receiving unit 2002 of the processing circuitry 2001 is configured to receive a pilot sequence from a transmitter (i.e., to perform step S2001 in FIG. 10B). For each pair of constellation points which are opposite numbers in a constellation map corresponding to a modulation scheme, the pilot sequence includes at least one constellation point of them. In one example, the pilot sequence may be viewed as one or more repetitions of a basic pilot sequence that contains a half of the constellation points in the constellation map.

The channel estimating unit 2003 is configured to perform channel estimation associated with each constellation point of the constellation map based on a received signal of the pilot sequence (i.e., to perform step S2002 in FIG. 10B). For each pair of constellation points that are opposite numbers, the channel estimating unit 2003 may perform channel estimation only once to obtain common channel parameters for the pair of constellation points. In a case where the received pilot includes repeated basic pilot sequences, the channel estimating unit 2003 may improve an accuracy of the estimation by averaging.

Optionally, the processing circuitry 2001 may further include an indication receiving unit (not shown). The indication receiving unit may receive an indication on the pilot sequence so as to know contents of the pilot sequence to be received next.

The electronic device 2000 may also include a communication unit 2005, for example. The communication unit 2005 can be configured to perform communication with the transmitter (e.g., the electronic device 1000 as described above), such as Terahertz communication, under control of the processing circuitry 2001. In one example, the communication unit 2005 can be implemented as a transceiver, including an antenna array and/or a radio frequency link, among other communication components. The communication unit 2005 is depicted with a dashed line because it may also be located outside the electronic device 2000.

The electronic device 2000 may also include a memory 2006. The memory 2006 may store various data and instructions, such as programs and data used for operation of the electronic device 2000, various data generated by the processing circuitry 2001, and the like. The memory 2006 is depicted in a dashed line because it may also be located within the processing circuitry 2001 or outside the electronic device 2000.

**[Second Embodiment; not forming part of the invention]**

According to a second embodiment of the present disclosure, a scenario is considered where there is compensation/predistortion for the RF hardware impairments at the transmitter. The second embodiment does not form part of the invention.

Although the transmitter has a compensation capability for the RF hardware impairments at the transmitter, residual distortions may still exist. The receiver may also compensate for the RF hardware impairments at the receiver by means of signal processing to remove the signal distortions caused by the hardware impairments, but may not remove the residual distortion generated at the transmitter. Furthermore, depending on a channel quality, the signal may suffer from a certain degree of channel noise during wireless transmission. Both of the residual distortion and the channel noise in the received signal may affect demodulation of the signal.

In the existing signal transmission system, influences of the residual distortion caused by the RF hardware impairment effect at the transmitter and the channel noise on the signal demodulation are unknown, so that transmission cannot be optimized well.

Therefore, the second embodiment of the present disclosure provides a mechanism for optimizing transmission parameters by using an index for measuring the residual distortion and the channel noise.

A relevant signal model is described below. For the transmitter, in the case where a predistortion/compensation circuit is provided, the transmit signal model thereof can be expressed as

$$\mathbf{s_{PA}[n] = s[n] + w_t[n]}$$

where $\mathbf{w_t[n] \sim CN(0, \sigma_t^2)}$ represents the residual distortion at the transmitter, and can be modeled as AWGN.

Then, the signal received by the receiver is modeled as

$$\mathbf{\tilde{y}[n] = \mu h e^{-j\theta_R[n]} s[n] + \nu h^* e^{j\theta_R[n]} s^*[n] + \mu h e^{-j\theta_R[n]} w_t[n] + \nu h^* e^{j\theta_R[n]} w_t^*[n] +}$$

$$\mathbf{\mu e^{-j\theta_R[n]} w[n] + \nu e^{j\theta_R[n]} w^*[n]} \quad (3)$$

Equivalent coefficients for the channel coefficient and the phase noise can be further defined by $\tilde{h} = he^{-j\theta_R[n]}$ while ignoring the influence of the phase noise on the noise term, and the above Equation (3) can be written as

$$\mathbf{\tilde{y}[n] = \mu \tilde{h} s[n] + \nu \tilde{h}^* s^*[n] + \mu \tilde{h} w_t[n] + \nu \tilde{h}^* w_t^*[n] + \mu w[n] + \nu w^*[n]} \quad (4)$$

where "$\mu\tilde{h}s[n]$" is a useful signal term, "$\nu\tilde{h}^*s^*[n]$" is an image disturbance term, and "$\mathbf{\mu \tilde{h} w_t[n] + \nu \tilde{h}^* w_t^*[n]}$" is a residual distortion term. "$\mu w[n] + \nu w^*[n]$" is a channel noise term, $\mathbf{w[n] \sim CN(0, \sigma_n^2)}$, which can be modeled as AWGN.

The receiver can compensate the IQ imbalance according to the above Equation (4), i.e., take $\mathbf{\tilde{y}[n] - \left(\frac{\nu}{\mu^*}\right) \tilde{y}^*[n]}$ as a compensated signal, wherein $\left(\frac{\nu}{\mu^*}\right) = \mathbf{a}$ is a compensation coefficient, and the compensated signal can be expressed as

$$\mathbf{\tilde{y}[n] - \left(\frac{\nu}{\mu^*}\right) \tilde{y}^*[n] = \left(\frac{|\mu|^2 - |\nu|^2}{\mu^*} \tilde{h}\right) s[n] + \left(\frac{|\mu|^2 - |\nu|^2}{\mu^*} \tilde{h}\right) w_t[n] + \left(\frac{|\mu|^2 - |\nu|^2}{\mu^*}\right) w[n]} \quad (5)$$

where there are the useful signal term, the residual distortion term, and the channel noise term on the right of Equation (5), respectively.

An equivalent channel can be further defined according to the above equation

$$\mathbf{b = \frac{|\mu|^2 - |\nu|^2}{\mu^*} \tilde{h}}$$

In order to estimate the compensation coefficient a and the equivalent channel **b**, the transmitter may transmit a pilot sequence PS1 with a length *N*. If the received signal **y[n]**, the pilot sequence PS1 and the AWGN term are all written into a form of N-dimensional column vector, then

$$\mathbf{y - ay^* = bs + bw_t + \left(\frac{|\mu|^2 - |\nu|^2}{\mu^*}\right) w} \quad (6)$$

By adopting a maximum likelihood estimation method, estimated values of **a** and **b** can be obtained by the receiver

$$\begin{bmatrix} \mathbf{\hat{a}} \\ \mathbf{\hat{b}} \end{bmatrix} = [\mathbf{y}^*, \mathbf{s}]^\dagger \mathbf{y},$$

where † represents a pseudo-inverse operation. In a joint estimation of **a** and **b** in this stage, since two parameters need to be estimated simultaneously, a long pilot sequence PS1 is required to ensure an accuracy of the estimation.

On the other hand, after the joint estimation of **a** and **b**, changes of the equivalent channel caused by the phase noise (which is different from the channel noise) needs to be tracked in real time. However, since the compensation coefficient **a** is not affected by phase noise, only the estimate for **b** needs to be updated periodically in a short time. The transmitter can additionally transmit a pilot sequence PS2 with a length P for updating **b**, and the updating of the estimate of **b** can be expressed as

$$\hat{\mathbf{b}}_{\mathbf{new}} = \frac{\mathbf{s}^{\mathbf{H}}(\mathbf{y} - \mathbf{a}\mathbf{y}^*)}{||\mathbf{s}||^2}$$

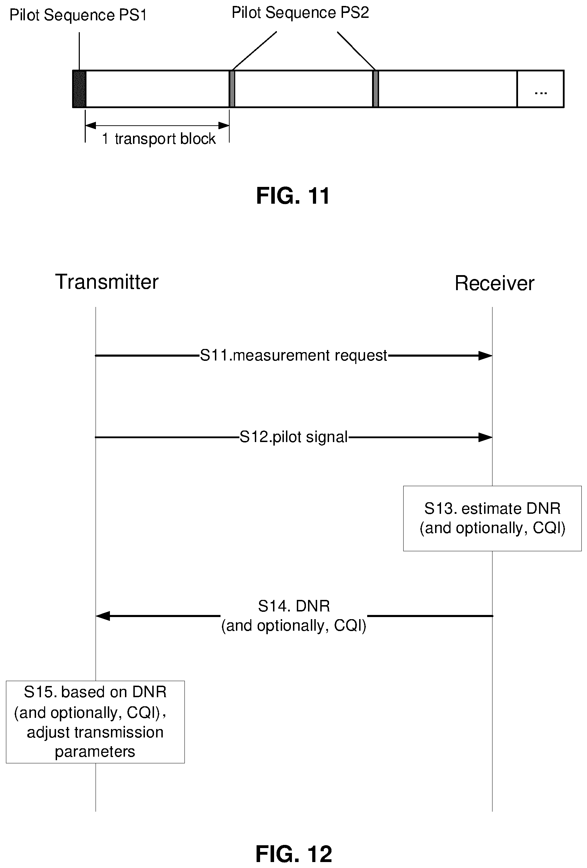

Since only one parameter **b** needs to be estimated here, the length P of corresponding pilot sequence may take a value smaller than N. Meanwhile, since the phase noise is strong in time-varying nature, a period of inserting the pilot sequence PS2 for tracking the phase noise (i.e., for updating **b**) is shorter than that of the pilot sequence PS1 for the joint estimation, e.g., one PS2 is inserted for each transport block, as shown in FIG. 11.

In one example, the pilot sequence PS1 can be carried by a channel state information reference signal (CSI-RS), a demodulation reference signal (DMRS), and/or the like, and the pilot sequence PS2 can be carried by a CSI-RS, a DMRS, a phase tracking reference signal (PT-RS), and/or the like. According to the second embodiment, the pilot sequences PS1 and PS2 are both constant-modulus sequences.

As described above, factors affecting the communication performance during the signal transmission include both of the channel noise and the signal distortion caused by residual hardware impairments in the transmitter, and thus according to the second embodiment of the present disclosure, a distortion noise ratio (DNR) is defined as an index for measuring a weight between a distortion component caused by the hardware impairments in the transmitter and a channel noise component. For example, DNR may be defined as a ratio of the residual distortion power to the channel noise power in the received signal.

A method of calculating the DNR is provided in connection with the above signal model.

The received residual distortion power may be expressed as $\widetilde{\sigma}_t^2 = |b|^2 \sigma_t^2$, and the channel noise power may be expressed as $\widetilde{\sigma}_n^2 = \frac{(|\mu|^2 - |\nu|^2)^2}{|\mu|^2} \sigma_n^2$. The estimate of $\widetilde{\sigma}_n^2$ can be given approximately by

$$\widehat{\widetilde{\sigma}_n^2} = \frac{1 - 2|\widehat{a}|^2}{1 + |\widehat{a}|^2} \widehat{\sigma_n^2}$$

Further, a total power of the channel noise and the residual distortion may be estimated as

$$\widehat{\widetilde{\sigma}^2} = \frac{||[y^*, s]^\dagger y - y||^2}{N}$$

The final estimate of DNR can be obtained from

$$\widehat{\mathbf{DNR}} = \frac{\left(\widehat{\widetilde{\sigma}^2} - \widehat{\widetilde{\sigma}_n^2}\right)}{\widehat{\widetilde{\sigma}_n^2}}$$

In the above equations, **s** can be selected as the pilot signal PS1 used for the joint estimation of **a** and **b** to improve an estimation accuracy of the DNR. Although one DNR estimation method is exemplified above, the present disclosure is not limited thereto, and the DNR may be estimated using various methods as long as they can measure a contrast of strength between the residual distortion and the channel noise.

The receiver may feed back the estimated DNR to the transmitter. Depending on a pre-configuration, the receiver may encode the DNR as a binary indication, only one low DNR indication, such as a bit '0', needs to be fed back when the estimated DNR is low (e.g., below a certain threshold, such as DNR ≤ 1), and a high DNR indication, such as a bit '1', may be fed back when the estimated DNR is high (e.g., above a certain threshold, such as DNR > 1).

Alternatively, the receiver may quantize the DNR into a series of discrete values to feed back the DNR more accurately.

Furthermore, as verified by simulation, in the exemplified DNR calculation method described above, an error of the DNR estimation is large when the DNR is low, and small when the DNR is high. Therefore, the receiver may also represent the DNR as 0 when it is below a certain threshold (e.g., DNR $\leq$ 1), and as a specific quantized value when the DNR is above a certain threshold (e.g., DNR > 1).

The transmitter may adjust transmission parameters based on at least the DNR fed back by the receiver to improve the communication performance. Specifically, if the DNR is high, it indicates that the signal distortion caused by RF hardware impairments at the transmitter is dominant, and at this time, the communication performance cannot be improved by increasing the transmission power, but a probability of false decision may be reduced by decreasing the modulation order or the coding efficiency, or the residual distortion may be reduced by recalibrating the compensation at the transmitter. If the DNR is low, it indicates that the channel noise is dominant, and at this time, besides decreasing the modulation order or the coding efficiency, it can also increase the transmission power to improve the system performance.

In addition to the DNR from the receiver, the transmitter can take a quality of the channel into account. For example, when the channel quality is good, the transmitter may not adjust the transmission parameters because the signal-to-noise ratio of the received signal may be sufficient to support the demodulation. When the channel quality is not good, the transmitter needs to adjust and optimize the transmission parameters, for example, by decreasing the modulation order or the coding efficiency with reference to the DNR.

A signaling flow diagram for adjusting the transmission parameters based on the DNR according to the second embodiment is described next with reference to FIG. 12.

As shown in FIG. 12, first in S11, the transmitter transmits a measurement request to the receiver to request the receiver to measure DNR. Subsequently, in S12, the transmitter transmits a pilot signal to the receiver. The pilot signal comprises a relatively long pilot sequence for accurate estimation. Optionally, the pilot signal may also be used to estimate the channel quality.

In S13, in response to receiving the measurement request for DNR, the receiver estimates DNR based on the received pilot signal, for example, using the DNR estimation method as described above. Optionally, the receiver may also estimate the channel quality based on the pilot signal to obtain, for example, a Channel Quality Indication (CQI).

At S14, the receiver feeds back the estimated DNR and optionally the CQI to the transmitter, and the transmitter adjusts the transmission parameters, such as the modulation order, the coding efficiency, the transmission power or the like, based on the DNR and/or the CQI in S15. The transmitter can then transmit data with the adjusted transmission parameters to implement signal transmissions, for example, on the Terahertz frequency band.

The present disclosure verifies the performance of the signal transmission method according to the second embodiment through simulation.

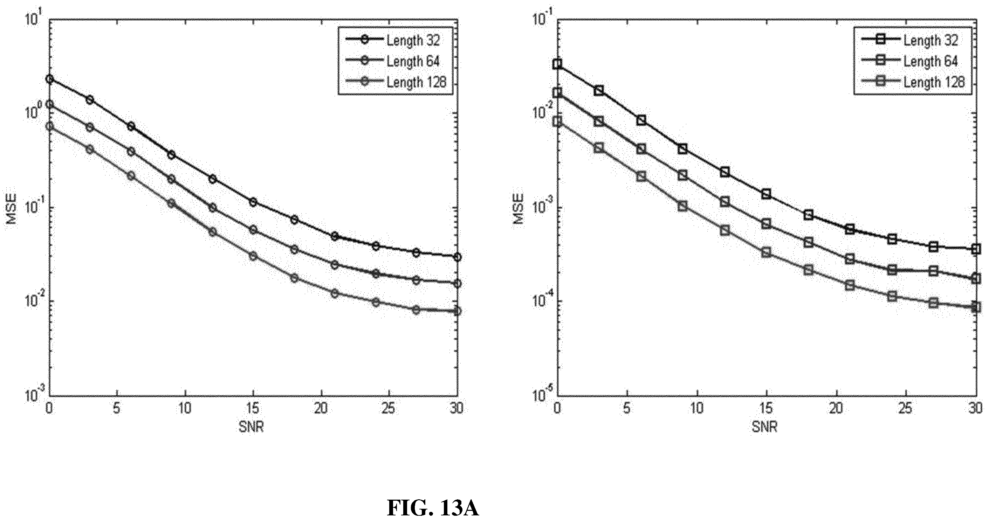

The performance of the joint estimation is considered first. IQ imbalance parameters $\varepsilon_T = \varepsilon_R = 0.1$ and $\phi_T = \phi_R = 2°$, phase noise parameters $\sigma_{\theta,T}^2, \sigma_{\theta,R}^2 \sim N(0, (5°)^2)$, and residual hardware impairment parameter $\sigma_t = 0.1$ in the transmitter are adopted. The simulation of Mean Square Error (MSE) of the joint estimation for **a** and **b** is shown in FIG. 13A, from which it can be seen that as the length of the pilot sequence increases, the estimation accuracy is significantly improved, and the transmitter may determine an appropriate pilot length according to the channel quality to ensure the estimation accuracy.

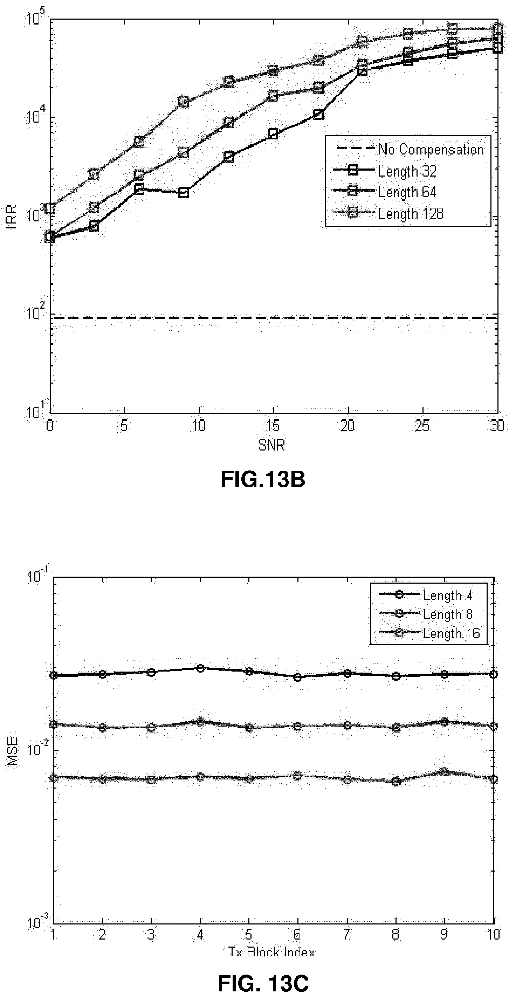

Further, the estimated compensation coefficient **â** is used for compensating the I/Q imbalance in the receiver, and Image Rejection Ratio (IRR) after the compensation is simulated, wherein the IRR is defined as a ratio of the power of a useful data signal to the power of an image interference. A result of the IRR simulation is shown in FIG. 13B, from which it can be seen that since the estimation accuracy of **â** can be improved by increasing the length of the pilot sequence, the IRR is also increased accordingly. The IRR after the compensation may provide a gain of 10-30dB over the IIR before the compensation as the signal-to-noise ratio and pilot length vary.

Next, considering the MSE for updating the equivalent channel **b** in the phase tracking phase, a simulation result is shown in FIG. 13C, where the MSE for the estimation of equivalent **b** remains stable and constant as the transport block index changes, and still decreases as the pilot length increases.

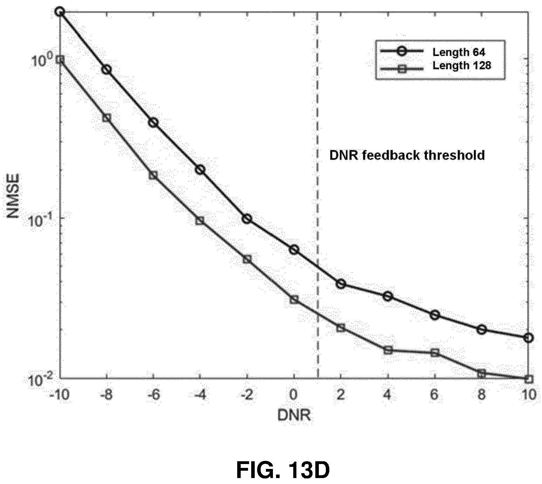

Finally, a simulation of normalized MSE (NMSE) for the DNR estimation is shown in FIG. 13D. It can be seen that when the DNR is high, its estimation accuracy is high, and when the DNR is low, its estimation accuracy is low. A feedback threshold (e.g., 1 dB) may thus be set as described above, and when the estimated DNR is below the feedback threshold, a low DNR indication is fed back to the transmitter, and when the estimated DNR is above the feedback threshold, a high DNR indication or a specific DNR quantized value is fed back to the transmitter.

Electronic devices and communication methods according to the second embodiment of the present disclosure are described next.

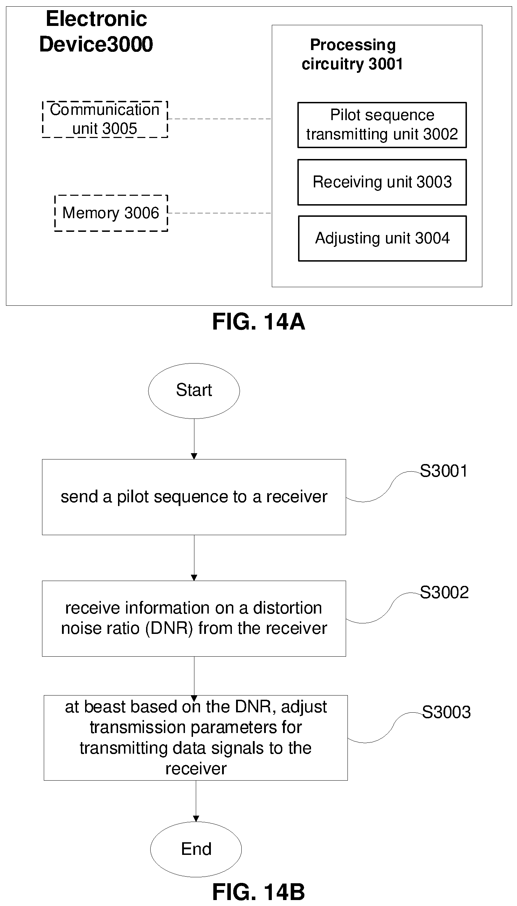

FIGS. 14A and 14B illustrate an electronic device for a transmitter and a communication method thereof, respectively, according to the second embodiment. FIG. 14A illustrates a block diagram of an electronic device 3000 for the transmitter. Depending on the specific communication scenario, the electronic device 3000 may be implemented as a base station or a UE. The electronic device 3000 can perform signal transmissions with an electronic device 4000 to be described below.

As shown in FIG. 14A, the electronic device 3000 includes a processing circuitry 3001, and the processing circuitry 3001 includes at least a pilot sequence transmitting unit 3002, a receiving unit 3003, and an adjusting unit 3004. The processing circuitry 3001 may be configured to perform a communication method illustrated in FIG. 14B.

The pilot sequence transmitting unit 3002 of the processing circuitry 3001 is configured to transmit a pilot sequence for estimating DNR to the receiver (i.e., to perform step S3001 in FIG. 14B). The pilot sequence may be transmitted through a reference signal such as CSI-RS, DMRS, or the like, and preferably has a relatively long length. Further, the pilot sequence transmitting unit 3002 may also transmit a pilot sequence for phase tracking, which may have a shorter length and a shorter period than the pilot sequence for estimating the DNR.

The receiving unit 3003 is configured to receive information on the DNR from the receiver, wherein the DNR indicates a ratio between a distortion component caused by hardware impairments in the transmitter and a channel noise component in the received signal of the pilot sequence (i.e., to perform step S3002 in FIG. 14B). The DNR may be a binary indication indicating high or low, a quantized value, or a combination thereof. Additionally, the receiving unit 3003 may also receive a Channel Quality Indication (CQI) fed back by the receiver, which is estimated by the receiver based on the received signal of the pilot sequence transmitted by the pilot sequence transmitting unit 3002.

The adjusting unit 3004 is configured to adjust transmission parameters for transmitting data signals to the receiver based on the received DNR (i.e., to perform step S3003 in FIG. 14B). In one example, in a case where the DNR is low, the adjustment unit 3004 increases transmission power, decreases a modulation order, or decreases coding efficiency, and in a case where DNR is high, the adjusting unit 3004 may decrease the modulation order or decrease the coding efficiency. In another example, the adjusting unit 3004 may also perform the adjustment of the transmission parameters only in a case where the channel quality is poor.

The electronic device 3000 may further include a communication unit 3005, for example. The communication unit 3005 may be configured to perform communication, such as Terahertz communication, with a receiver (e.g., the electronic device 4000 as described below) under control of the processing circuitry 3001. In one example, the communication unit 3005 may be implemented as a transceiver, including an antenna array and/or a radio frequency link, among other communication components. The communication unit 3005 is depicted with a dashed line, since it may also be located outside the electronic device 3000.

The electronic device 3000 can also include a memory 3006. The memory 3006 may store various data and instructions, such as programs and data for operation of the electronic device 3000, various data generated by the processing circuitry 3001, and so forth. The memory 3006 is depicted with a dashed line because it may also be located within the processing circuitry 3001 or outside the electronic device 3000.

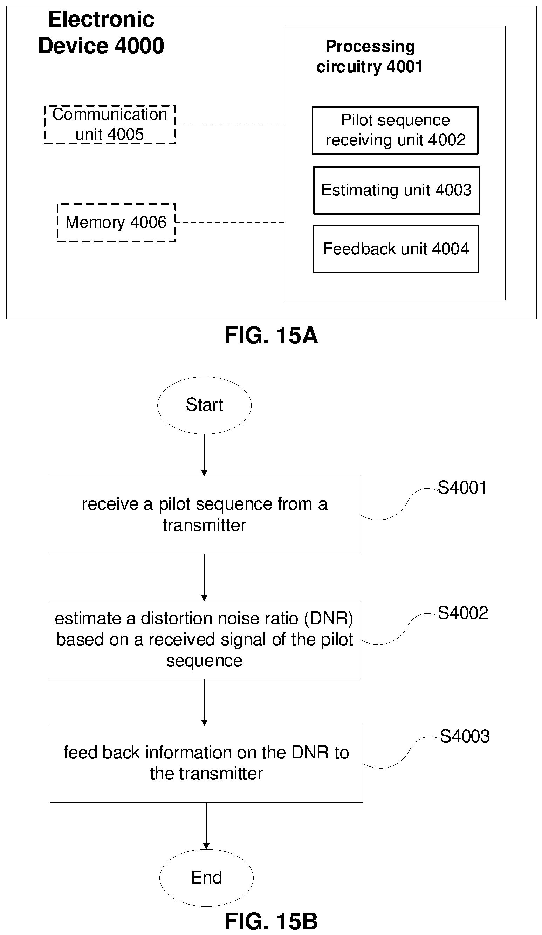

FIGS. 15A and 15B illustrate an electronic device for a receiver and a communication method thereof, respectively, according to the second embodiment. FIG. 15A illustrates a block diagram of an electronic device 4000 for the receiver according to the present disclosure. Depending on the specific communication scenario, the electronic device 4000 may be implemented as a base station or a UE. The electronic device 4000 may perform signal transmissions with the electronic device 3000 as described above.

As shown in FIG. 15A, the electronic device 4000 includes a processing circuitry 4001, and the processing circuitry 4001 includes at least a pilot sequence receiving unit 4002, an estimating unit 4003, and a feedback unit 4004. The processing circuitry 4001 may be configured to perform the communication method illustrated in FIG. 15B.

The pilot sequence receiving unit 4002 of the processing circuitry 4001 is configured to receive a pilot sequence from the transmitter (i.e., to perform step S4001 in FIG. 15B). In one example, the pilot sequence receiving unit 4002 receives a pilot sequence in response to a measurement request from the transmitter. The pilot sequence may be carried by a CSI-RS, a DMRS or the like.

The estimating unit 4003 is configured to estimate DNR based on the received signal of the pilot sequence (i.e., to perform step S4002 in FIG. 15B). Additionally, the estimating unit 4003 can also estimate a channel quality based on the received signal of the pilot sequence.

The feedback unit 4004 is configured to feed back information on the DNR to the transmitter (i.e., to perform step S4003 in FIG. 15B) for the transmitter to adjust the transmission parameters. DNR may be encoded in various forms, such as a binary indication indicating high or low, a specific quantized value, or a combination thereof. Additionally, the feedback unit 4004 may feed back a CQI indicating the channel quality to the transmitter together with the DNR.

The electronic device 4000 may further include a communication unit 4005, for example. The communication unit 4005 may be configured to perform communication, such as Terahertz communication, with a transmitter (e.g., the electronic device 3000 as described below) under control of the processing circuitry 4001. In one example, the communication unit 4005 may be implemented as a transceiver, including an antenna array and/or a radio frequency link, among other communication components. The communication unit 4005 is depicted with a dashed line, since it may also be located outside the electronic device 4000.

The electronic device 4000 can also include a memory 4006. The memory 4006 may store various data and instructions, such as programs and data for operation of the electronic device 4000, various data generated by the processing circuitry 4001, and so forth. The memory 4006 is depicted with a dashed line because it may also be located within the processing circuitry 4001 or outside the electronic device 4000.

It should be understood that the units of the electronic device 1000, 2000, 3000 and 4000 described in the above embodiments are only logical modules divided according to the specific functions they implement, and are not used to limit specific implementations. In an actual implementation, the foregoing units may be implemented as individual physical entities, or may also be implemented by a single entity (for example, a processor (CPU or DSP, etc.), an integrated circuit, etc.).

The processing circuitry 1001, 2001, 3001 or 4001 may refer to various implementations of a digital circuitry, an analog circuitry, or a circuitry for hybrid signal (a combination of analog signal and digital signal) that perform functions in a computing system. The processing circuitry may include, for example, a circuitry such as an integrated circuit (IC), an application specific integrated circuit (ASIC), a portion or circuit of an individual processor core, an entire processor core, an individual processor, a programmable hardware device such as a field programmable array (FPGA), and/or a system including multiple processors.

The memory 1006, 2006, 3006 or 4006 may be a volatile memory and/or a non-volatile memory. For example, the memory may include, but is not limited to, a random access memory (RAM), a dynamic random access memory (DRAM), a static random access memory (SRAM), a read only memory (ROM) or a flash memory.

**[Application examples of the present disclosure]**

The technology of the present disclosure can be applied to various products.

For example, the electronic devices 1000, 2000, 3000 and 4000 according to the embodiments of the present disclosure can be implemented as a variety of base stations or included in a variety of base stations, or can be implemented as a variety of user devices or included in a variety of user devices.

The communication methods according to the embodiments of the present disclosure may be implemented by various base stations or user devices; the methods and operations according to the embodiments of the present disclosure may be embodied as computer-executable instructions, stored in a non-transitory computer-readable storage medium, and can be performed by various base stations or user devices to implement one or more of the above-mentioned functions.

The technology according to the embodiments of the present disclosure can be made into various computer program products, which can be used in various base stations or user devices to implement one or more of the above-mentioned functions.

The base stations mentioned in the present disclosure can be implemented as any type of base stations, preferably, such as the macro gNB or ng-eNB defined in the 3GPP 5G NR standard. A gNB may be a gNB that covers a cell smaller than a macro cell, such as a pico gNB, micro gNB, and home (femto) gNB. Instead, the base station may be implemented as any other types of base stations such as a NodeB, eNodeB and a base transceiver station (BTS). The base station may include a main body configured to control wireless communication, and one or more remote radio heads (RRH), a wirelesss relay, a drone control tower, a control node in an automated factory or the like disposed in a different place from the main body.

The user device may be implemented as a mobile terminal such as a smartphone, a tablet personal computer (PC), a notebook PC, a portable game terminal, a portable/dongle type mobile router, and a digital camera apparatus, or an in-vehicle terminal such as a car navigation device. The terminal device may also be implemented as a terminal (that is also referred to as a machine type communication (MTC) terminal) that performs machine-to-machine (M2M) communication, a drone, a sensor or actuator in an automated factory or the like. Furthermore, the terminal device may be a wireless communication module (such as an integrated circuit module including a single die) mounted on each of the above terminals.

Examples of the base station and the user device in which the present disclosure can be applied will be described briefly below.

It should be understood that the term "base station" in the present disclosure has the full breadth of its usual meaning and includes at least a wireless communication station that is used as part of a wireless communication system or radio system for facilitating communication. Examples of base stations may be, for example but not limited to, the following: one or both of a base transceiver station (BTS) and a base station controller (BSC) in a GSM system, one or both of a radio network controller (RNC) and Node B in a 3G communication system, an eNB in an LTE and LTE-Advanced system, or a gNB and ng-eNB in the 5G communication system. In D2D, M2M, and V2V communication scenarios, a logical entity with control function for communication may also be referred to as a base station. In cognitive radio communication scenarios, a logical entity that plays a spectrum coordination role may also be referred to as a base station. In an automated factory, a logical entity providing the network control function may be referred to as a base station.

First application example of base station

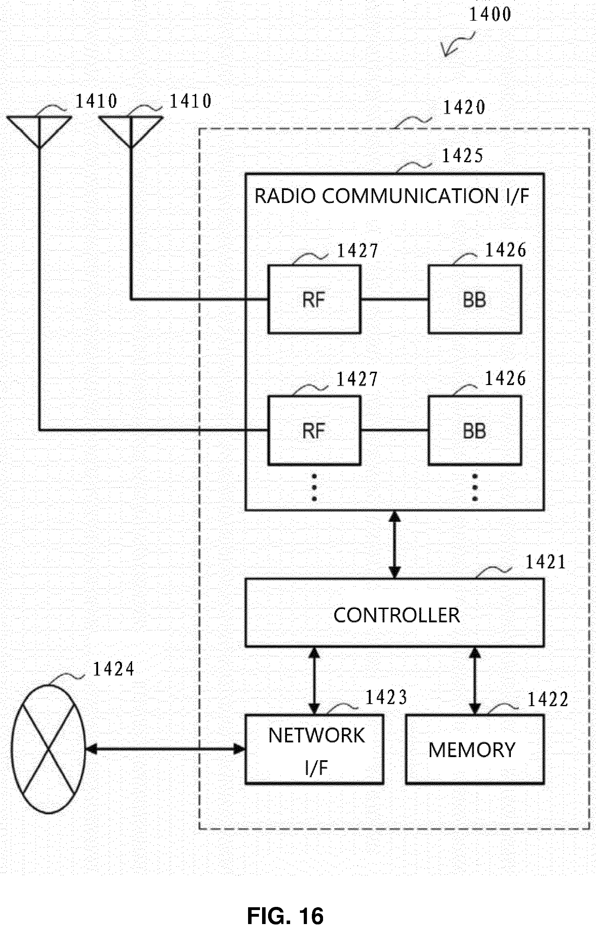

FIG. 16 is a block diagram showing a first example of a schematic configuration of a base station to which the technology of the present disclosure can be applied. In FIG. 16, the base station is implemented as gNB 1400. The gNB 1400 includes a plurality of antennas 1410 and a base station device 1420. The base station device 1420 and each antenna 1410 may be connected to each other via an RF cable. In an implementation manner, the gNB 1400 (or the base station device 1420) herein may correspond to any of the above-mentioned electronic device 1000, 2000, 3000 or 4000.

The antennas 1410 includes multiple antenna elements, such as multiple antenna arrays for large-scale MIMO. The antennas 1410, for example, can be arranged into a matrix of antenna arrays, and are used by the base station device 1420 to transmit and receive wireless signals. For example, multiple antennas 1410 may be compatible with multiple frequency bands used by gNB 1400.

The base station device 1420 includes a controller 1421, a memory 1422, a network interface 1423, and a radio communication interface 1425.

The controller 1421 may be, for example, a CPU or a DSP, and operates various functions of the base station device 1420 at a higher layer. For example, the controller 1421 may include any of the processing circuitry 1001, 2001, 3001 or 4001 as described above, perform the communication method described in FIG. 9B, 10B, 14B or 15B, or control various components of the electronic device 1000, 2000, 3000 or 4000. For example, the controller 1421 generates data packets based on data in signals processed by the radio communication interface 1425, and passes the generated packets via the network interface 1423. The controller 1421 may bundle data from multiple baseband processors to generate bundled packets, and pass the generated bundled packets. The controller 1421 may have logical functions that perform controls such as radio resource control, radio bearer control, mobility management, admission control, and scheduling. The controls can be performed in conjunction with a nearby gNB or core network node. The memory 1422 includes a RAM and a ROM, and stores a program executed by the controller 1421 and various types of control data such as a terminal list, transmission power data, and scheduling data.

The network interface 1423 is a communication interface for connecting the base station device 1420 to the core network 1424. The controller 1421 may communicate with a core network node or another gNB via the network interface 1423. In this case, the gNB 1400 and the core network node or other gNBs may be connected to each other through a logical interface such as an S1 interface and an X2 interface. The network interface 1423 may also be a wired communication interface or a radio communication interface for a wireless backhaul line. If the network interface 1423 is a radio communication interface, compared with the frequency band used by the radio communication interface 1425, the network interface 1423 can use a higher frequency band for wireless communication.

The radio communication interface 1425 supports any cellular communication scheme such as 5G NR, and provides a wireless connection to a terminal located in a cell of the gNB 1400 via an antenna 1410. The radio communication interface 1425 may generally include, for example, a baseband (BB) processor 1426 and an RF circuit 1427. The BB processor 1426 may perform, for example, encoding / decoding, modulation / demodulation, and multiplexing / demultiplexing, and execute various types of signal processing in layers such as the physical layer, the MAC layer, the RLC layer, and the PDCP layer. As an alternative of the controller 1421, the BB processor 1426 may have a part or all of the above-mentioned logical functions. The BB processor 1426 may be a memory storing a communication control program, or a module including a processor and related circuits configured to execute the program. Updating the program can change the function of the BB processor 1426. The module may be a card or a blade inserted into a slot of the base station device 1420. Alternatively, the module may be a chip mounted on a card or a blade. Meanwhile, the RF circuit 1427 may include, for example, a mixer, a filter, and an amplifier, and transmits and receives a wireless signal via the antenna 1410. Although FIG. 16 illustrates an example in which one RF circuit 1427 is connected to one antenna 1410, the present disclosure is not limited to this illustration, but one RF circuit 1427 may be connected to multiple antennas 1410 at the same time.

As shown in FIG. 16, the radio communication interface 1425 may include a plurality of BB processors 1426. For example, the plurality of BB processors 1426 may be compatible with multiple frequency bands used by gNB 1400. As shown in FIG. 16, the radio communication interface 1425 may include a plurality of RF circuits 1427. For example, the plurality of RF circuits 1427 may be compatible with multiple antenna elements. Although FIG. 16 shows an example in which the radio communication interface 1425 includes a plurality of BB processors 1426 and a plurality of RF circuits 1427, the radio communication interface 1425 may also include a single BB processor 1426 or a single RF circuit 1427.

In the gNB 1400 illustrated in FIG. 16, one or more of the units included in the processing circuitry 1001, 2001, 3001 or 4001 (for example, the transmitting unit 1003, the receiving unit 2002, the receiving unit 3003, or the like) may be implemented in the radio communication interface 1425. Alternatively, at least a part of these components may be implemented in the controller 1421. As an example, the gNB 1400 includes a part (for example, the BB processor 1426) or the entire of the radio communication interface 1425 and/or a module including the controller 1421, and the one or more components may be implemented in the module. In this case, the module may store a program (in other words, a program causing the processor to execute operations of the one or more components) causing the processor to function as the one or more components, and execute the program. As another example, a program causing the processor to function as the one or more components may be installed in the gNB 1400, and the radio communication interface 1425 (for example, the BB processor 1426) and/or the controller 1421 may execute the program. As described above, as a device including the one or more components, the gNB 1400, the base station device 1420 or the module may be provided. In addition, a readable medium in which the program is recorded may be provided.

Second application example of base station

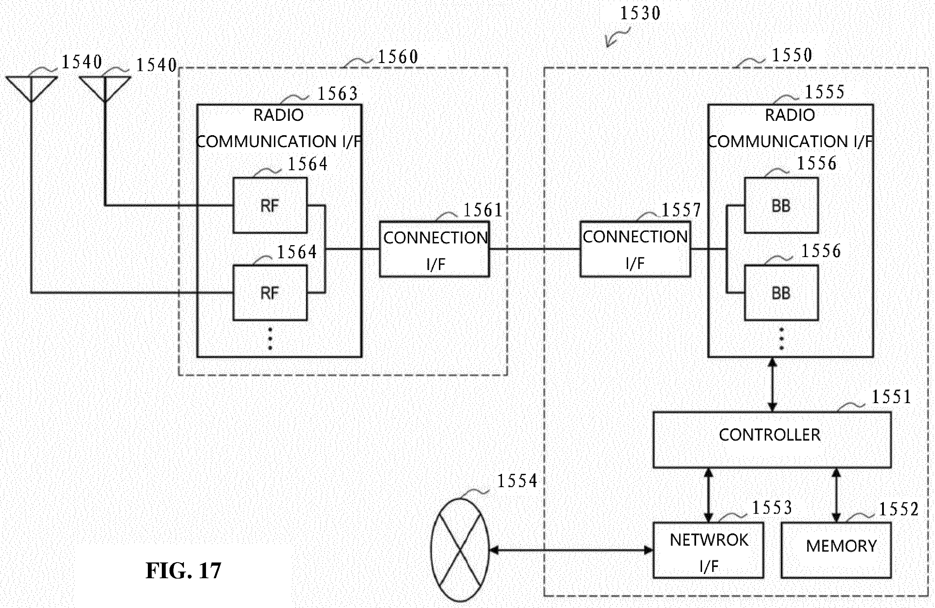

FIG. 17 is a block diagram showing a second example of a schematic configuration of a base station to which the technology of the present disclosure can be applied. In FIG. 17, the base station is shown as gNB 1530. The gNB 1530 includes multiple antennas 1540, base station equipment 1550, and RRH 1560. The RRH 1560 and each antenna 1540 may be connected to each other via an RF cable. The base station equipment 1550 and the RRH 1560 may be connected to each other via a high-speed line such as a fiber optic cable. In an implementation manner, the gNB 1530 (or the base station device 1550) herein may correspond to any of the above-mentioned electronic device 1000, 2000, 3000 or 4000.

The antennas 1540 includes multiple antenna elements, such as multiple antenna arrays for large-scale MIMO. The antennas 1540, for example, can be arranged into a matrix of antenna arrays, and are used by the base station device 1550 to transmit and receive wireless signals. For example, multiple antennas 1540 may be compatible with multiple frequency bands used by gNB 1530.

The base station device 1550 includes a controller 1551, a memory 1552, a network interface 1553, a radio communication interface 1555, and a connection interface 1557. The controller 1551, the memory 1552, and the network interface 1553 are the same as the controller 1421, the memory 1422, and the network interface 1423 described with reference to FIG. 16.

The radio communication interface 1555 supports any cellular communication scheme such as 5G NR, and provides wireless communication to a terminal located in a sector corresponding to the RRH 1560 via the RRH 1560 and the antenna 1540. The radio communication interface 1555 may typically include, for example, a BB processor 1556. The BB processor 1556 is the same as the BB processor 1426 described with reference to FIG. 16 except that the BB processor 1556 is connected to the RF circuit 1564 of the RRH 1560 via the connection interface 1557. As shown in FIG. 17, the radio communication interface 1555 may include a plurality of BB processors 1556. For example, multiple BB processors 1556 may be compatible with multiple frequency bands used by gNB 1530. Although FIG. 17 shows an example in which the radio communication interface 1555 includes a plurality of BB processors 1556, the radio communication interface 1555 may also include a single BB processor 1556.

The connection interface 1557 is an interface for connecting the base station device 1550 (radio communication interface 1555) to the RRH 1560. The connection interface 1557 may also be a communication module for communication in the above-mentioned high-speed line connecting the base station device 1550 (radio communication interface 1555) to the RRH 1560.

The RRH 1560 includes a connection interface 1561 and a radio communication interface 1563.

The connection interface 1561 is an interface for connecting the RRH 1560 (radio communication interface 1563) to the base station device 1550. The connection interface 1561 may also be a communication module for communication in the above-mentioned high-speed line.

The radio communication interface 1563 transmits and receives wireless signals via the antenna 1540. The radio communication interface 1563 may generally include, for example, an RF circuit 1564. The RF circuit 1564 may include, for example, a mixer, a filter, and an amplifier, and transmits and receives wireless signals via the antenna 1540. Although FIG. 17 illustrates an example in which one RF circuit 1564 is connected to one antenna 1540, the present disclosure is not limited to this illustration, but one RF circuit 1564 may be connected to multiple antennas 1540 at the same time.

As shown in FIG. 17, the radio communication interface 1563 may include a plurality of RF circuits 1564. For example, the plurality of RF circuits 1564 may support multiple antenna elements. Although FIG. 17 shows an example in which the radio communication interface 1563 includes a plurality of RF circuits 1564, the radio communication interface 1563 may include a single RF circuit 1564.

In the gNB 1500 shown in FIG. 17, one or more units included in the processing circuitry 1001, 2001, 3001 or 4001 (for example, the transmitting unit 1003, the receiving unit 2002, the receiving unit 3003 or the like) may be implemented in the radio communication interface 1525. Alternatively, at least a part of these components may be implemented in the controller 1521. For example, the gNB 1500 includes a part (for example, the BB processor 1526) or the whole of the radio communication interface 1525, and/or a module including the controller 1521, and one or more components may be implemented in the module. In this case, the module may store a program for allowing the processor to function as one or more components (in other words, a program for allowing the processor to perform operations of one or more components), and may execute the program. As another example, a program for allowing the processor to function as one or more components may be installed in the gNB 1500, and the radio communication interface 1525 (for example, the BB processor 1526) and/or the controller 1521 may execute the program. As described above, as a device including one or more components, the gNB 1500, the base station device 1520, or a module may be provided, and a program for allowing the processor to function as one or more components may be provided. In addition, a readable medium in which the program is recorded may be provided.

First application example of user device

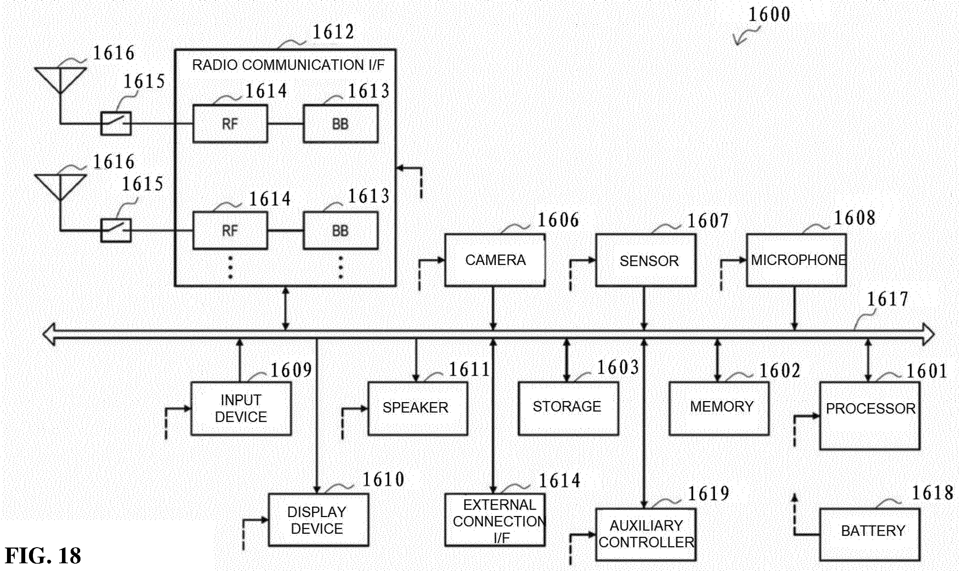

FIG. 18 is a block diagram showing an example of a schematic configuration of a smartphone 1600 to which the technology of the present disclosure can be applied. In an example, the smart phone 1600 may be implemented as any of the electronic device 1000, 2000, 3000 or 4000.

The smartphone 1600 includes a processor 1601, a memory 1602, a storage device 1603, an external connection interface 1604, a camera device 1606, a sensor 1607, a microphone 1608, an input device 1609, a display device 1610, a speaker 1611, a radio communication interface 1612, one or more antenna switches 1615, one or more antennas 1616, a bus 1617, a battery 1618, and an auxiliary controller 1619.

The processor 1601 may be, for example, a CPU or a system on chip (SoC), and controls functions of an application layer and another layer of the smartphone 1600. The processor 1601 may include or serve as any of the processing circuitry 1001, 2001, 3001 or 4001. The memory 1602 includes a RAM and a ROM, and stores data and programs executed by the processor 1601. The storage device 1603 may include a storage medium such as a semiconductor memory and a hard disk. The external connection interface 1604 is an interface for connecting external devices such as a memory card and a universal serial bus (USB) device to the smartphone 1600.

The camera device 1606 includes an image sensor such as a charge-coupled device (CCD) and a complementary metal oxide semiconductor (CMOS), and generates a captured image. The sensor 1607 may include a set of sensors such as a measurement sensor, a gyroscope sensor, a geomagnetic sensor, and an acceleration sensor. The microphone 1608 converts a sound input to the smartphone 1600 into an audio signal. The input device 1609 includes, for example, a touch sensor, a keypad, a keyboard, a button, or a switch configured to detect a touch on the screen of the display device 1610, and receives an operation or information input from a user. The display device 1610 includes a screen such as a liquid crystal display (LCD) and an organic light emitting diode (OLED) display, and displays an output image of the smartphone 1600. The speaker 1611 converts an audio signal output from the smartphone 1600 into a sound.

The radio communication interface 1612 supports any cellular communication scheme such as 4G LTE, 5G NR or the like, and performs wireless communication. The radio communication interface 1612 may generally include, for example, a BB processor 1613 and an RF circuit 1614. The BB processor 1613 may perform, for example, encoding/decoding, modulation/demodulation, and multiplexing/demultiplexing, and perform various types of signal processing for wireless communication. Meanwhile, the RF circuit 1614 may include, for example, a mixer, a filter, and an amplifier, and transmits and receives wireless signals via the antenna 1616. The radio communication interface 1612 may be a chip module on which a BB processor 1613 and an RF circuit 1614 are integrated. As shown in FIG. 18, the radio communication interface 1612 may include multiple BB processors 1613 and multiple RF circuits 1614. Although FIG. 18 illustrates an example in which the radio communication interface 1612 includes a plurality of BB processors 1613 and a plurality of RF circuits 1614, the radio communication interface 1612 may also include a single BB processor 1613 or a single RF circuit 1614.

In addition, in addition to the cellular communication scheme, the radio communication interface 1612 may support other types of wireless communication scheme, such as a short-range wireless communication scheme, a near field communication scheme, and a wireless local area network (LAN) scheme. In this case, the radio communication interface 1612 may include a BB processor 1613 and an RF circuit 1614 for each wireless communication scheme.

Each of the antenna switches 1615 switches a connection destination of the antenna 1616 between a plurality of circuits included in the radio communication interface 1612 (for example, circuits for different wireless communication schemes).

The antennas 1616 includes multiple antenna elements, such as multiple antenna arrays for large-scale MIMO. The antennas 1616, for example, can be arranged into a matrix of antenna arrays, and are used by the radio communication interface 1612 to transmit and receive wireless signals. The smart phone 1600 can includes one or more antenna panels (not shown).

In addition, the smartphone 1600 may include an antenna 1616 for each wireless communication scheme. In this case, the antenna switch 1615 may be omitted from the configuration of the smartphone 1600.

The bus 1617 connects the processor 1601, the memory 1602, the storage device 1603, the external connection interface 1604, the camera device 1606, the sensor 1607, the microphone 1608, the input device 1609, the display device 1610, the speaker 1611, the radio communication interface 1612, and the auxiliary controller 1619 to each other. The battery 1618 supplies power to each block of the smartphone 1600 shown in FIG. 18 via a feeder, and the feeder is partially shown as a dotted line in the figure. The auxiliary controller 1619 operates the minimum necessary functions of the smartphone 1600 in the sleep mode, for example.

In the smart phone 1600 shown in FIG. 18, one or more units included in the processing circuitry 1001, 2001, 3001 or 4001 (for example, the transmitting unit 1003, the receiving unit 2002, the receiving unit 3003 or the like) may be implemented in the radio communication interface 1612. Alternatively, at least a part of these components may be implemented in the processor 1601 or the auxiliary controller 1619. As an example, the smart phone 1600 includes a part (for example, the BB processor 1613) or the whole of the radio communication interface 1612, and/or a module including the processor 1601 and/or the auxiliary controller 1619, and one or more components may be Implemented in this module. In this case, the module may store a program that allows processing to function as one or more components (in other words, a program for allowing the processor to perform operations of one or more components), and may execute the program. As another example, a program for allowing the processor to function as one or more components may be installed in the smart phone 1600, and the radio communication interface 1612 (for example, the BB processor 1613), the processor 1601, and/or the auxiliary The controller 1619 can execute this program. As described above, as a device including one or more components, a smart phone 1600 or a module may be provided, and a program for allowing a processor to function as one or more components may be provided. In addition, a readable medium in which the program is recorded may be provided.

Second application example of user device

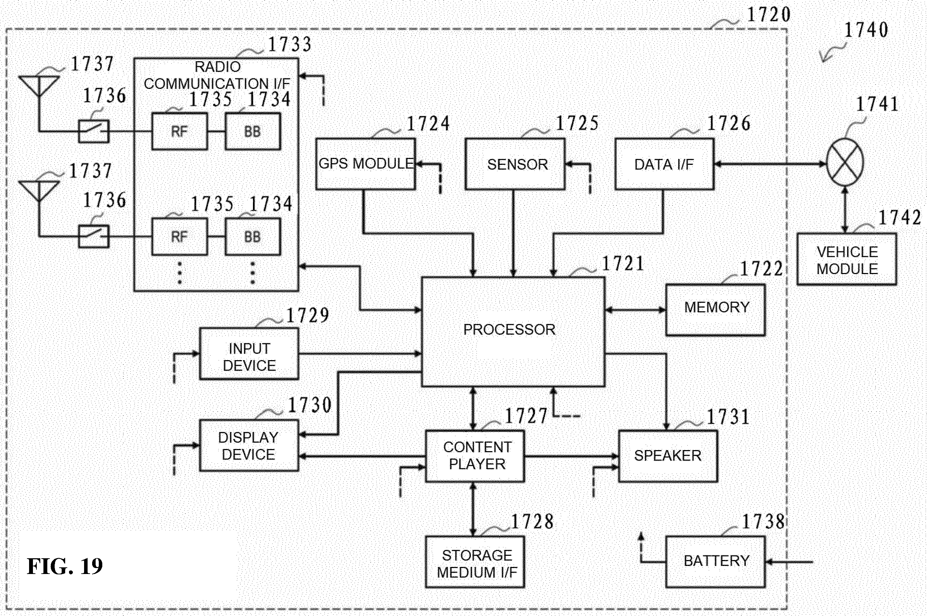

FIG. 19 is a block diagram showing an example of a schematic configuration of a car navigation device 1720 to which the technology of the present disclosure can be applied. The car navigation device 1720 includes a processor 1721, a memory 1722, a global positioning system (GPS) module 1724, a sensor 1725, a data interface 1726, a content player 1727, a storage medium interface 1728, an input device 1729, a display device 1730, a speaker 1731, and a radio communication interface 1733, one or more antenna switches 1736, one or more antennas 1737, and a battery 1738. In one example, the car navigation device 1720 may be implemented as any of the electronic device 1000, 2000, 3000 or 4000 as described in the present disclosure.

The processor 1721 may be, for example, a CPU or a SoC, and controls navigation functions and other functions of the car navigation device 1720. The memory 1722 includes a RAM and a ROM, and stores data and programs executed by the processor 1721.

The GPS module 1724 uses a GPS signal received from a GPS satellite to measure the position (such as latitude, longitude, and altitude) of the car navigation device 1720. The sensor 1725 may include a set of sensors such as a gyroscope sensor, a geomagnetic sensor, and an air pressure sensor. The data interface 1726 is connected to, for example, an in-vehicle network 1741 via a terminal not shown, and acquires data (such as vehicle speed data) generated by the vehicle.

The content player 1727 reproduces content stored in a storage medium such as a CD and a DVD, which is inserted into the storage medium interface 1728. The input device 1729 includes, for example, a touch sensor, a button, or a switch configured to detect a touch on the screen of the display device 1730, and receives an operation or information input from a user. The display device 1730 includes a screen such as an LCD or OLED display, and displays an image of a navigation function or reproduced content. The speaker 1731 outputs the sound of the navigation function or the reproduced content.

The radio communication interface 1733 supports any cellular communication scheme such as 4G LTE or 5G NR, and performs wireless communication. The radio communication interface 1733 may generally include, for example, a BB processor 1734 and an RF circuit 1735. The BB processor 1734 may perform, for example, encoding/decoding, modulation/demodulation, and multiplexing/demultiplexing, and perform various types of signal processing for wireless communication. Meanwhile, the RF circuit 1735 may include, for example, a mixer, a filter, and an amplifier, and transmit and receive wireless signals via the antenna 1737. The radio communication interface 1733 may also be a chip module on which a BB processor 1734 and an RF circuit 1735 are integrated. As shown in FIG. 19, the radio communication interface 1733 may include a plurality of BB processors 1734 and a plurality of RF circuits 1735. Although FIG. 19 shows an example in which the radio communication interface 1733 includes a plurality of BB processors 1734 and a plurality of RF circuits 1735, the radio communication interface 1733 may also include a single BB processor 1734 or a single RF circuit 1735.

In addition, in addition to the cellular communication scheme, the radio communication interface 1733 may support other types of wireless communication scheme, such as a short-range wireless communication scheme, a near field communication scheme, and a wireless LAN scheme. In this case, the radio communication interface 1733 may include a BB processor 1734 and an RF circuit 1735 for each wireless communication scheme.

Each of the antenna switches 1736 switches the connection destination of the antenna 1737 between a plurality of circuits included in the radio communication interface 1733, such as circuits for different wireless communication schemes.

The antennas 1737 includes multiple antenna elements, such as multiple antenna arrays for large-scale MIMO. The antennas 1737, for example, can be arranged into a matrix of antenna arrays, and are used by the radio communication interface 1733 to transmit and receive wireless signals.

In addition, the car navigation device 1720 may include an antenna 1737 for each wireless communication

# EP 4 195 516 B1

scheme. In this case, the antenna switch 1736 may be omitted from the configuration of the car navigation device 1720.

The battery 1738 supplies power to each block of the car navigation device 1720 shown in FIG. 19 via a feeder, and the feeder is partially shown as a dotted line in the figure. The battery 1738 accumulates power provided from the vehicle.

In the car navigation device 1720 shown in FIG. 19, one or more units included in the processing circuitry 1001, 2001, 3001 or 4001 (for example, the transmitting unit 1003, the receiving unit 2002, the receiving unit 3003 or the like) may be implemented in the radio communication interface 1733. Alternatively, at least a part of these components may be implemented in the processor 1721. As an example, the car navigation device 1720 includes a part (for example, the BB processor 1734) or the whole of the radio communication interface 1733, and/or a module including the processor 1721, and one or more components may be implemented in the module. In this case, the module may store a program that allows processing to function as one or more components (in other words, a program for allowing the processor to perform operations of one or more components), and may execute the program. As another example, a program for allowing the processor to function as one or more components may be installed in the car navigation device 1720, and the radio communication interface 1733 (for example, the BB processor 1734) and/or the processor 1721 may Execute the procedure. As described above, as a device including one or more components, a car navigation device 1720 or a module may be provided, and a program for allowing the processor to function as one or more components may be provided. In addition, a readable medium in which the program is recorded may be provided.

The technology of the present disclosure may also be implemented as an in-vehicle system (or vehicle) 1740 including one or more of a car navigation device 1720, an in-vehicle network 1741, and a vehicle module 1742. The vehicle module 1742 generates vehicle data such as vehicle speed, engine speed, and failure information, and outputs the generated data to the in-vehicle network 1741.

Although the illustrative embodiments of the present disclosure have been described with reference to the accompanying drawings, the present disclosure is certainly not limited to the above examples. Those skilled in the art may achieve various adaptions and modifications within the scope of the appended claims, and it will be appreciated that these adaptions and modifications certainly fall into the scope of the technology of the present disclosure.

For example, in the above embodiments, the multiple functions included in one module may be implemented by separate means. Alternatively, in the above embodiments, the multiple functions included in multiple modules may be implemented by separate means, respectively. In additions, one of the above functions may be implemented by multiple modules. Needless to say, such configurations are included in the scope of the technology of the present disclosure.

In this specification, the steps described in the flowcharts include not only the processes performed sequentially in chronological order, but also the processes performed in parallel or separately but not necessarily performed in chronological order. Furthermore, even in the steps performed in chronological order, needless to say, the order may be changed appropriately.

Although the present disclosure and its advantages have been described in detail, it will be appreciated that various changes, replacements and transformations may be made without departing from the scope of the present disclosure as defined by the appended claims. In addition, the terms "include", "comprise" or any other variants of the embodiments of the present disclosure are intended to be non-exclusive inclusion, such that the process, method, article or device including a series of elements includes not only these elements, but also those that are not listed specifically, or those that are inherent to the process, method, article or device. In case of further limitations, the element defined by the sentence "include one" does not exclude the presence of additional same elements in the process, method, article or device including this element.

## Claims

1. An electronic device (2000) for a transmitter, comprising:
   a processing circuitry (2001) configured to:

   generate a pilot sequence based on a constellation map corresponding to a modulation scheme, the constellation map having constellation points X = {$s_1$, $s_2$, ..., $S_M$} M>2, the constellation map having pairs of constellation points, wherein each pair of constellation points contains opposite constellation points such that for constellation points of the constellation map $\chi = \{s_1, s_2, ..., s_M\}$, two constellation points that are opposite are, for a channel, si and -si, and the pilot sequence contains only one constellation point of from each of the pairs of opposite constellation points; and
   transmit the pilot sequence to a receiver for channel estimation associated with each constellation point in the constellation map by the receiver.

2. The electronic device of claim 1, wherein generating the pilot sequence includes:

generating said pilot sequence by repeating the pilot sequence one or more times in a predetermined repetitive pattern.

3. The electronic device of claim 2, wherein the processing circuitry is further configured to:
   indicate the pilot sequence to the receiver before transmitting the pilot sequence.

4. The electronic device of claim 3, wherein in a case where the pilot sequence and its repetitive pattern have been configured to the receiver in advance, indicating the pilot sequence to the receiver includes sending information on a number of repetitions of the pilot sequence.

5. The electronic device of claim 1, wherein the processing circuitry is further configured to:

   modulate data signals with said modulation scheme; and
   transmit the modulated data signals to the receiver.

6. The electronic device of claim 5, wherein the processing circuitry is further configured to:
   transmit the modulated data signals to the receiver using a Terahertz frequency band.

7. An electronic device (2000) for a receiver comprising:
   a processing circuitry (2001) configured to:

   receive a pilot sequence from a transmitter, the pilot sequence based on a constellation map corresponding to a modulation scheme, the constellation map having constellation points $X = \{s_1, s_2, ..., S_M\}$ M>2, the constellation map having pairs of constellation points wherein each pair of constellation points contains opposite constellation points, such that for constellation points of the constellation map $\chi = \{s_1, s_2, ..., s_M\}$, two constellation points that are opposite are, for a channel, si and -si,;
   the pilot sequence containing only one constellation point from each of the pairs of opposite constellation points and
   perform channel estimation associated with each constellation point in the constellation map, based on a received signal of the pilot sequence.

8. The electronic device of claim 7, wherein the pilot sequence includes the pilot sequence repeated one or more times in a predetermined repetitive pattern.

9. The electronic device of claim 8, wherein the processing circuitry is further configured to:
   receive an indication about the pilot sequence from the transmitter before receiving the pilot sequence.

10. The electronic device of claim 9, wherein in a case where the pilot sequence and its repetitive pattern have been configured to the receiver in advance, receiving the indication about the pilot sequence includes receiving information on a number of repetitions of the pilot sequence.

11. The electronic device of claim 7, wherein the processing circuitry is further configured to:

    receive data signals modulated with said modulation scheme from the transmitter; and
    demodulate the data signals based on a result of the channel estimation.

12. The electronic device of claim 11, wherein the processing circuitry is further configured to:
    receive the data signals using a Terahertz frequency band.

13. The electronic device of claim 11, wherein the processing circuitry is further configured to:
    based on the result of the channel estimation, demodulate the data signals by using a least distance criterion without channel equalization.

**Patentansprüche**

1. Elektronische Vorrichtung (2000) für eine Übertragungseinrichtung, umfassend:
   eine Verarbeitungsschaltlogik (2001), die konfiguriert ist zum:

Erzeugen einer Pilotsequenz basierend auf einer Konstellationskarte, die einem Modulationsschema entspricht, wobei die Konstellationskarte Konstellationspunkte X = {$s_1$, $s_2$..., $S_M$} M>2 aufweist, wobei die Konstellationskarte Paare von Konstellationspunkten aufweist, wobei jedes Paar von Konstellationspunkten gegenüberliegende Konstellationspunkte derart enthält, dass für Konstellationspunkte der Konstellationskarte $\chi$ = **{$s_1$, $s_2$..., $S_M$}** zwei Konstellationspunkte, die gegenüberliegend sind, für einen Kanal si und -si sind, und die Pilotsequenz nur einen Konstellationspunkt von jedem der Paare gegenüberliegender Konstellationspunkte enthält; und Übertragen der Pilotsequenz an einen Empfänger für eine Kanalschätzung, die jedem Konstellationspunkt in der Konstellationskarte zugeordnet ist, durch den Empfänger.

2. Elektronische Vorrichtung nach Anspruch 1, wobei das Erzeugen der Pilotsequenz einschließt:
Erzeugen der Pilotsequenz durch ein- oder mehrmaliges Wiederholen der Pilotsequenz in einem zuvor bestimmten Wiederholungsmuster.

3. Elektronische Vorrichtung nach Anspruch 2, wobei die Verarbeitungsschaltlogik ferner konfiguriert ist zum:
Angeben der Pilotsequenz an den Empfänger, bevor die Pilotsequenz übertragen wird.

4. Elektronische Vorrichtung nach Anspruch 3, wobei in einem Fall, in dem die Pilotsequenz und ihr Wiederholungsmuster für den Empfänger im Voraus konfiguriert wurden, das Angeben der Pilotsequenz an den Empfänger ein Senden von Informationen über eine Anzahl von Wiederholungen der Pilotsequenz einschließt.

5. Elektronische Vorrichtung nach Anspruch 1, wobei die Verarbeitungsschaltlogik ferner konfiguriert ist zum:

Modulieren von Datensignalen mit dem Modulationsschema; und
Übertragen der modulierten Datensignale an den Empfänger.

6. Elektronische Vorrichtung nach Anspruch 5, wobei die Verarbeitungsschaltlogik ferner konfiguriert ist zum:
Übertragen der modulierten Datensignale unter Verwendung eines Terahertz-Frequenzbandes an den Empfänger.

7. Elektronische Vorrichtung (2000) für einen Empfänger, umfassend:
eine Verarbeitungsschaltlogik (2001), die konfiguriert ist zum:

Empfangen einer Pilotsequenz von einer Übertragungseinrichtung, wobei die Pilotsequenz auf einer Konstellationskarte basiert, die einem Modulationsschema entspricht, wobei die Konstellationskarte Konstellationspunkte X = {$s_1$, $s_2$..., $S_M$} M>2 aufweist, wobei die Konstellationskarte Paare von Konstellationspunkten aufweist, wobei jedes Paar von Konstellationspunkten gegenüberliegende Konstellationspunkte derart enthält,
dass für
Konstellationspunkte der Konstellationskarte $\chi$ = **{$s_1$, $s_2$..., $S_M$}** zwei Konstellationspunkte, die gegenüberliegend sind, für einen Kanal $_{Si}$ und -$_{Si}$ sind; wobei die Pilotsequenz nur einen Konstellationspunkt von jedem der Paare gegenüberliegender Konstellationspunkte enthält
und
Durchführen der Kanalschätzung, die jedem Konstellationspunkt in der Konstellationskarte zugeordnet ist, basierend auf einem empfangenen Signal der Pilotsequenz.

8. Elektronische Vorrichtung nach Anspruch 7, wobei die Pilotsequenz die Pilotsequenz einschließt, die ein- oder mehrmals in einem zuvor bestimmten Wiederholungsmuster wiederholt wird.

9. Elektronische Vorrichtung nach Anspruch 8, wobei die Verarbeitungsschaltlogik ferner konfiguriert ist zum:
Empfangen einer Angabe über die Pilotsequenz von der Übertragungseinrichtung bevor die Pilotsequenz empfangen wird.

10. Elektronische Vorrichtung nach Anspruch 9, wobei in einem Fall, in dem die Pilotsequenz und ihr Wiederholungsmuster für den Empfänger im Voraus konfiguriert wurden, das Empfangen der Angabe über die Pilotsequenz das Empfangen von Informationen über eine Anzahl von Wiederholungen der Pilotsequenz einschließt.

11. Elektronische Vorrichtung nach Anspruch 7, wobei die Verarbeitungsschaltlogik ferner konfiguriert ist zum:

Empfangen von Datensignalen, die mit dem Modulationsschema moduliert sind, von der Übertragungseinrichtung; und

Demodulieren der Datensignale basierend auf einem Ergebnis der Kanalschätzung.

**12.** Elektronische Vorrichtung nach Anspruch 11, wobei die Verarbeitungsschaltlogik ferner konfiguriert ist zum:
Empfangen der Datensignale unter Verwendung eines Terahertz-Frequenzbandes.

**13.** Elektronische Vorrichtung nach Anspruch 11, wobei die Verarbeitungsschaltlogik ferner konfiguriert ist zum:
Demodulieren der Datensignale basierend auf dem Ergebnis der Kanalschätzung durch Verwenden eines Mindestabstandskriteriums ohne Kanalentzerrung.

**Revendications**

**1.** Dispositif électronique (2000) destiné à un transmetteur, comprenant :
un système de circuit de traitement (2001) configuré pour :
générer une séquence pilote en fonction d'une carte de constellation correspondant à un schéma de modulation, la carte de constellation ayant des points de constellation X = $\{s_1\ s_2\ ...,\ S_M\}$ M>2, la carte de constellation ayant des paires de points de constellation, dans lequel chaque paire de points de constellation contient des points de constellation opposés de telle sorte que pour des points de constellation de la carte de constellation $\chi = \{s_1, s_2 ..., S_M\}$ deux points de constellation qui sont opposés sont, pour un canal, $s_i$ et $-s_i$, et la séquence pilote ne contient qu'un seul point de constellation provenant de chacune des paires de points de constellation opposés ; et transmettre la séquence pilote à un récepteur pour une estimation de canal associée à chaque point de constellation dans la carte de constellation par le récepteur.

**2.** Dispositif électronique selon la revendication 1, dans lequel la génération de la séquence pilote comporte :
la génération de ladite séquence pilote en répétant la séquence pilote une ou plusieurs fois dans un motif répétitif prédéterminé.

**3.** Dispositif électronique selon la revendication 2, dans lequel le système de circuits de traitement est configuré en outre pour :
indiquer la séquence pilote au récepteur avant transmission de la séquence pilote.

**4.** Dispositif électronique selon la revendication 3, dans lequel dans un cas où la séquence pilote et son motif répétitif ont été configurés pour le récepteur à l'avance, l'indication de la séquence pilote au récepteur comporte l'envoi d'informations relatives à un nombre de répétitions de la séquence pilote.

**5.** Dispositif électronique selon la revendication 1, dans lequel le système de circuits de traitement est configuré en outre pour :

moduler des signaux de données avec ledit schéma de modulation ; et
transmettre les signaux de données modulés au récepteur.

**6.** Dispositif électronique selon la revendication 5, dans lequel le système de circuits de traitement est configuré en outre pour :
transmettre les signaux de données modulés au récepteur à l'aide d'une bande de fréquence térahertz.

**7.** Dispositif électronique (2000) destiné à un récepteur comprenant :
un système de circuit de traitement (2001) configuré pour :

recevoir une séquence pilote en provenance d'un transmetteur, la séquence pilote étant en fonction d'une carte de constellation correspondant à un schéma de modulation, la carte de constellation ayant des points de constellation X=$\{s_1,s_2,...,\ S_M\}$ M>2, la carte de constellation ayant des paires de points de constellation dans lequel chaque paire de points de constellation contient des points de constellation opposés, de telle sorte que pour des points de constellation de la carte de constellation $\chi = \{s_1, s_2 ..., S_M\}$, deux points de constellation qui sont opposés sont, pour un canal, $s_i$ et $-s_i$, ; la séquence pilote ne contenant qu'un seul point de constellation provenant de chacune des paires de points de constellation opposés
et
mettre en œuvre une estimation de canal associée à chaque point de constellation dans la carte de constellation, en fonction d'un signal reçu de la séquence pilote.

8. Dispositif électronique selon la revendication 7, dans lequel la séquence pilote comporte la séquence pilote répétée une ou plusieurs fois dans un motif répétitif prédéterminé.

9. Dispositif électronique selon la revendication 8, dans lequel le système de circuits de traitement est configuré en outre pour :
recevoir une indication concernant la séquence pilote en provenance du transmetteur avant réception de la séquence pilote.

10. Dispositif électronique selon la revendication 9, dans lequel dans un cas où la séquence pilote et son motif répétitif ont été configurés pour le récepteur à l'avance, la réception de l'indication concernant la séquence pilote comporte la réception d'informations relatives à un nombre de répétitions de la séquence pilote.

11. Dispositif électronique selon la revendication 7, dans lequel le système de circuits de traitement est configuré en outre pour :

recevoir des signaux de données modulés avec ledit schéma de modulation en provenance du transmetteur ; et
démoduler les signaux de données en fonction d'un résultat de l'estimation de canal.

12. Dispositif électronique selon la revendication 11, dans lequel le système de circuits de traitement est configuré en outre pour :
recevoir les signaux de données à l'aide d'une bande de fréquence térahertz.

13. Dispositif électronique selon la revendication 11, dans lequel le système de circuits de traitement est configuré en outre pour :
en fonction du résultat de l'estimation de canal, démoduler les signaux de données en utilisant un critère de moindre distance sans égalisation de canal.

**THz band**

$$10^9 \quad 10^{10} \quad 10^{11} \quad 10^{12} \quad 10^{13} \quad 10^{14} \quad 10^{15} \quad 10^{16} \quad f\,/\mathrm{Hz}$$

| Radio | Microwave | Terahertz | Near infrared, infrared | | UV | X ray |

$$3\times10^{-1} \quad 3\times10^{-2} \quad 3\times10^{-3} \quad 3\times10^{-4} \quad 3\times10^{-5} \quad 3\times10^{-6} \quad 3\times10^{-7} \quad 3\times10^{-8} \quad \lambda\,/m$$

**FIG. 1**

$$\sum_{m=1}^{M} a_{\mathrm{I},m}\delta(t-mT_{\mathrm{s}})$$

$$g(t)$$

$$(1+\epsilon)\cos(2\pi f_{\mathrm{c}}t-\phi)$$

$$f_{\mathrm{c}}$$

$$90^{\circ}+2\phi$$

$$(1-\epsilon)\sin(2\pi f_{\mathrm{c}}t+\phi)$$

$$\sum_{m=1}^{M} a_{\mathrm{Q},m}\delta(t-mT_{\mathrm{s}})$$

$$g(t)$$

**FIG. 2**

(a)

(b)

(c)

(d)

**FIG. 3**

Transmitter

Receiver

S1.generate a pilot
sequence

S2.indicate the pilot sequence

S3.transmit the pilot sequence

S4.receive the pilot
sequence, and
perform channel
estimation

# FIG. 4

BPSK

QPSK

4QAM

16QAM

64QAM

## FIG. 5

| Enablement Indication | Modulation Scheme | Number of Repetitions | Repetitive Pattern |
|---|---|---|---|

## FIG. 6

Decision regions for normal
QPSK constellation map

Decision regions under least
distance criterion

FIG. 7

FIG. 8

Electronic
Device1000

Processing
circuitry 1001

Communication
unit 1005

Generating unit
1002

Memory 1006

Transmitting unit
1003

**FIG. 9A**

Start

generate a pilot sequence based on a
constellation map corresponding to a
modulation scheme

S1001

transmit the pilot sequence to a receiver for
channel estimation associated with each
constellation point in the constellation map
by the receiver

S1002

End

**FIG. 9B**

Electronic
Device 2000

Processing
circuitry 2001

Communication
unit 2005

Receiving unit 2002

Memory 2006

Channel estimating
unit 2003

**FIG. 10A**

Start

receive a pilot sequence from a transmitter — S2001

perform channel estimation associated with each
constellation point in the constellation map, based
on a received signal of the pilot sequence — S2002

End

**FIG. 10B**

Pilot Sequence PS1       Pilot Sequence PS2

|← 1 transport block →|

## FIG. 11

Transmitter            Receiver

———————S11.measurement request———————→

———————————S12.pilot signal———————————→

S13. estimate DNR
(and optionally, CQI)

←——————— S14. DNR ———————
(and optionally, CQI)

S15. based on DNR
(and optionally, CQI),
adjust transmission
parameters

## FIG. 12

**FIG. 13A**

EP 4 195 516 B1

**FIG.13B**

**FIG. 13C**

FIG. 13D

**Electronic Device3000**

Processing circuitry 3001

Communication unit 3005

Pilot sequence transmitting unit 3002

Receiving unit 3003

Memory 3006

Adjusting unit 3004

**FIG. 14A**

Start

send a pilot sequence to a receiver — S3001

receive information on a distortion noise ratio (DNR) from the receiver — S3002

at beast based on the DNR, adjust transmission parameters for transmitting data signals to the receiver — S3003

End

**FIG. 14B**

**Electronic Device 4000**

**Processing circuitry 4001**

Communication unit 4005

Pilot sequence receiving unit 4002

Estimating unit 4003

Memory 4006

Feedback unit 4004

**FIG. 15A**

Start

receive a pilot sequence from a transmitter — S4001

estimate a distortion noise ratio (DNR) based on a received signal of the pilot sequence — S4002

feed back information on the DNR to the transmitter — S4003

End

**FIG. 15B**

FIG. 16

**FIG. 17**

**FIG. 18**

**FIG. 19**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010783403
- EP 2712138 A

- US 2015117866 A